# EUROPEAN PATENT SPECIFICATION

(11) **EP 2 416 585 B1**
(45) Date of publication and mention of the grant of the patent: **19.10.2016**
(21) Application number: 11166204.5
(22) Date of filing: 16.05.2011
(51) Int. Cl.: H04N 13/04

(54) **Shutter glasses and method for controlling a pair of shutter glasses for stereoscopic image display**
Shutterbrille und Verfahren zur Steuerung eines Shutterbrillenpaares zur stereoskopischen Bildanzeige
Verres d'obturateur et procédé de commande d'une paire de verres d'obturateur pour affichage d'images stéréoscopiques

(30) Priority: 06.08.2010 TW 099126274
(43) Date of publication of application: 08.02.2012
(73) Proprietor: Acer Incorporated, New Taipei City 221 (TW)
(72) Inventor: Ko, Chueh-Pin, 221, New Taipei City (TW)
(74) Representative: Becker Kurig Straus

(56) References cited:
- JP-A- 2009 025 436
- US-A1- 2007 229 395
- US-A1- 2009 040 402
- US-A1- 2009 237 495
- US-A1- 2010 066 820

## Description

This invention relates to a technique of viewing stereo images, and more particularly, to a pair of shutter glasses capable of being utilized for viewing stereo images presented by a video output apparatus and a method for controlling the pair of shutter glasses according to the pre-characterizing clauses of claims 1 and 7.

With the development of science and technology, users are pursing stereoscopic and more real image displays rather than high quality images. There are two techniques of present stereo image display. One is to use a video output apparatus which collaborates with glasses (such as anaglyph glasses, polarization glasses or shutter glasses), while the other one to directly use a video output apparatus without any accompanying glasses. No matter which technique is utilized, the main theory of stereo image display is to make the left eye and the right eye see different images, thus the brain will regard the different images seen from two eyes as stereo images.

For a pair of shutter glasses, they are widely used for users to view stereo images presented by a video output apparatus. The pair of shutter glasses includes two shutter lenses, and allow user's left eye to see left-eye images and right eye to see right-eye images by properly switching the shutter lenses between an on-state (or called open state) and an off-state (or called close state). In general, as to the pair of shutter glasses of video output apparatus operated in a lower refresh rate (e.g., 60 Hz or 120 Hz), each shutter lens is continuously switched between the on-state and the off-state. For example, when the shutter lens corresponding to left eye is in an on-state in a certain time period, the shutter lens corresponding to right eye is in an off-state, and when the shutter lens corresponding to right eye is in an on-state, the shutter lens corresponding to left eye is in an off-state. However, if the shutter-on period of the shutter lens is not properly controlled, the user's left eye may probably see part of the right-eye image and/or the user's right eye may probably see part of the left-eye image, which significantly degrades the quality of the stereo image the user views.

Since each shutter lens of the pair of shutter glasses is switched between the on-state and the off-state, therefore, the ambient brightness perceived by the user is lower than real ambient brightness. Moreover, according to the polarization direction of the image light output generated from the video output apparatus, the shutter lenses of the pair of shutter glasses have corresponding polarization setting. However, as the ambient light comprises light beams of different angles, so when the shutter lens of the pair of shutter glasses is in an on-state, only light beams which conform to the polarization setting of the shutter lens will penetrate through the shutter lens. Thus, the ambient brightness perceived by the user is lower than the real ambient brightness. If the user feels lack of ambient brightness when wearing the pair of shutter glasses, he/she may not identify items, such as a keyboard or remote control, beyond the screen of the video output apparatus clearly, leading to inconvenience in stereo image viewing for users.

Moreover, suppose that a liquid crystal layer is employed in the shutter lens of the pair of shutter glasses to control the switching between an on-state and an off-state. In general, when there is no voltage applied on the liquid crystal layer, the shutter lens is in an on-state and allows light beams to penetrate therethrough. As described above, under the control of well known control mechanism, the two shutter lenses of the pair of shutter glasses stay in an on-state alternately. Therefore, when there is no voltage applied on the liquid crystal layer of one shutter lens for allowing light beams to penetrate therethrough, the liquid crystal layer of the other shutter lens requires a voltage applied thereto for blocking light beams to penetrate therethrough. Thus, if the shutter lens stays in an off-state longer, the power consumption of the pair of shutter glasses is increased accordingly.

In conclusion, how to provide a reasonable image quality when the user is viewing stereo images presented by the video output apparatus, and increase the ambient brightness users feel when the user wears the pair of shutter glasses and/or decrease power consumption of the pair of shutter glasses without affecting user's viewing of stereo images is an issue to be solved immediately in this technical field.

US 2010/0066820 discloses methods and apparatuses for displaying a stereoscopic image. The method includes alternately generating repeated left-eye images and repeated right-eye images; turning off a backlight unit during a period in which a left-eye image and a right-eye image are mixed and turning on the backlight unit during a period in which only one of the left-eye and right-eye images is displayed; and controlling a left-eye shutter and a right-eye shutter of shutter glasses during a period in which the backlight unit is turned on.

US 2009/237495 discloses a stereoscopic image display apparatus, which includes: a liquid crystal display device that alternately displays a left-eye image in a first time frame and a right-eye image in a second time frame, the left-eye image and the right-eye image being images to be respectively viewed by left and right eyes of a viewer; and an LCD shutter glasses that includes: a left-eye shutter that covers the left eye of the viewer during the second time frame; and a right-eye shutter that covers the right eye of the viewer during the first time frame, wherein the liquid crystal display device sequentially displays a first left-eye image frame and a second left-eye image frame included in the left-eye image during the first time frame and sequentially displays a first right-eye image frame and a second right-eye image frame included in the right-eye image during the second time frame.

JP 2009-25436 discloses an electro-optical device (200) equipped with: an image display means (100) displaying a frame image; a writing means (206) writing an image data relating to the frame image in the image displaying means; an image data supply means (203) supplying image data at a frequency n times as that of image signals to the writing means; a light source means (211) irradiating the image displaying means with light;; and a control means (210) controlling the writing means so that frame images respectively relating to image data for a right eye and for a left eye included in the image data to be written are alternately displayed each in a first period according to the frequency in the image display means and that the image data to be written are written in a second period in the image display means, and controlling the light source means so that the light is turned off in the second period of the first period and the light is turned on in a third period following the second period.

US2009/0040402 discloses a liquid crystal projector which projects a three-dimensional imaged based on image signals for the left and right eyes, which includes: a liquid crystal panel into which an image for the left or right eye is written in a one-field time period based on the image signal; an optical shutter has a plurality of divisional regions arranged in a vertical direction and controllable independently in regard to whether or not light should be blocked; a polarizing element has a plurality of divisional regions arranged in vertical direction and controllable independently in regard to whether the polarization direction should be set to that for the left eye or the right eye; and a control circuit controls the optical shutter and the polarizing element in synchronism with a writing position in the liquid crystal panel.

US20070229395 discloses a system, method, and computer program product for controlling stereo glasses shutters. In use, a right eye shutter of stereo glasses is controlled to switch between a closed orientation and an open orientation. Further, a left eye shutter of the stereo glasses is controlled to switch between the closed orientation and the open orientation. To this end, the right eye shutter and the left eye shutter of the stereo glasses may be controlled such that the right eye shutter and the left eye shutter simultaneously remain in the closed orientation for a predetermined amount of time.

This in mind, the present invention aims at providing a pair of shutter glasses and a method for controlling the pair of shutter glasses, which can provide a reasonable image quality when the user is viewing stereo images presented by the video output apparatus, and lengthen the shutter-on period of the shutter lens of the pair of shutter glasses to thereby increase the ambient brightness users feel and/or decrease power consumption of the pair of shutter glasses effectively. This is achieved by a method and a pair of shutter glasses according to claims 1 and 7, respectively. The dependent claims pertain to corresponding further developments and improvements.

In the following, the invention is further illustrated by way of example, taking reference to the accompanying drawings. Thereof:
- FIG. 1: is a function block diagram of the pair of shutter glasses utilized for viewing stereo images presented by video output apparatus of present invention;
- FIG. 2: is a sequence diagram of the first control method employed for controlling the pair of shutter glasses shown in FIG. 1;
- FIG. 3: is a continued sequence diagram of the operation in FIG. 2 based on the concept of using mixed glasses cycles;
- FIG. 4: is a sequence diagram of the second control method employed for controlling the pair of shutter glasses shown in FIG. 1;
- FIG. 5: is a diagram illustrating the operation of a scanning backlight module;
- FIG. 6: is a sequence diagram of the third control method employed for controlling the pair of shutter glasses shown in FIG. 1;
- FIG. 7: is a continued sequence diagram of the operation in FIG. 6 based on the concept of using mixed glasses cycles;
- FIG. 8: is a sequence diagram of the fourth control method employed for controlling the pair of shutter glasses shown in FIG. 1;
- FIG. 9: is a sequence diagram of the fifth control method employed for controlling the pair of shutter glasses shown in FIG. 1;
- FIG. 10: is a continued sequence diagram of the operation in FIG. 9 based on the concept of using mixed glasses cycles; and
- FIG. 11: is a sequence diagram of the sixth control method employed for controlling the pair of shutter glasses shown in FIG. 1.

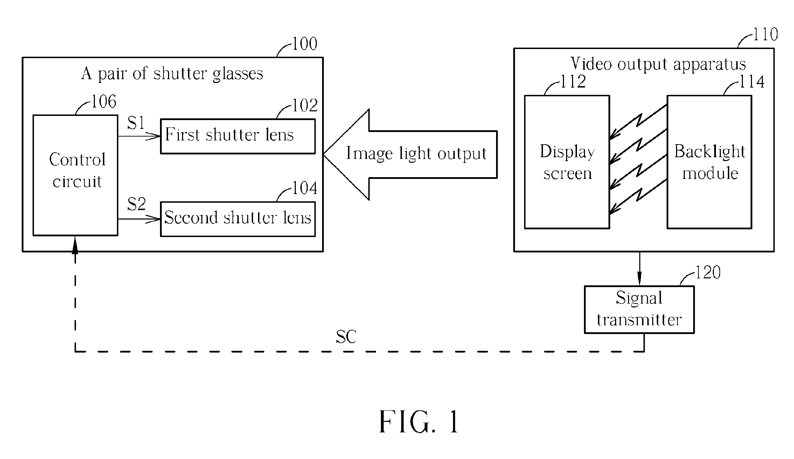

Please refer to FIG. 1, which is a function block diagram of a pair of shutter glasses utilized for viewing stereo images presented by a video output apparatus. In present exemplary embodiment, pair of shutter glasses 100 comprises, but is not limited to, a first shutter lens 102, a second shutter lens 104 and a control circuit 106. One of the first shutter lens 102 and second shutter lens 104 (e.g., the first shutter lens 102) is utilized for viewing left-eye images, and the other one of the first shutter lens 102 and the second shutter lens 104 (e.g., the second shutter lens 104) is utilized for viewing right-eye images. Besides, the control circuit 106 respectively outputs control signals S1 and S2 to the first shutter lens 102 and the second shutter lens 104, in order to control the first shutter lens 102 to be switched between an on-state (or called open state) and an off-state (or called a close state), and control the second shutter lens 104 to be switched between an on-state and an off-state. For example, the first shutter lens 102 and the second shutter lens 104 have liquid crystal layers, respectively. Therefore, the control signal S1/S2 may be a control voltage utilized for controlling the rotation of the liquid crystal cells (LC cells) in the liquid crystal layer to control light transmission rate. However, this is for illustrative purposes only, and is not meant to be a limitation of the present invention. For example, any structure that can control light transmission rate may be utilized for realizing the first shutter lens 102 and the second shutter lens 104. This also achieves the objective of controlling the first shutter lens 102 and the second shutter lens 104 to be switched between the on-state and the off-state.

In the present invention, the "off-state" described above means that the first shutter lens 102/the second shutter lens 104 is totally opaque (i.e., the light transmission rate is 0%). Therefore, as long as the first shutter lens/the second shutter lens is not totally opaque (i.e., the light transmission rate is not 0%), it may be regarded as staying in the "on-state". For example, when the first shutter lens 102/the second shutter lens 104 is fully open (e.g., the light transmission rate is 100%), half open (e.g., the light transmission rate is 50%), or slightly open (e.g., the light transmission rate is 0.1 %), the first shutter lens 102/the second shutter lens 104 may be regarded as staying in an on-state. In brief, when the light transmission rate of the first shutter lens 102/the second shutter lens 104 is larger than 0% (but smaller than or equal to 100%), the first shutter lens 102/the second shutter lens 104 is staying in an on-state.

A user may wear the pair of shutter glasses 100 to view stereo images presented by the video output apparatus 100. For example, the video output apparatus 110 may be a liquid crystal display (LCD), and therefore comprises, but is not limited to, a display screen (e.g., an LCD panel) 112 and a backlight module 114. Backlight module 114 provides light source needed by the display screen 112, and the pair of shutter glasses 100 control whether image light output generated by the display screen 112 may reach user's left eye or right eye. Please note that the video output apparatus 110 is not limited to be realized by an LCD apparatus, that is, the video output apparatus 110 may by any video output apparatus that collaborates with the pair of shutter glasses 100 for presenting stereo images to the user. For example, the video output apparatus 110 may be an organic light-emitting diode (OLED) display, a plasma display, a digital light processing (DLP) display/projector, a liquid crystal on Silicon (LCoS) display/projector, etc.

The pair of shutter glasses 100 may receive reference information SC from the video output apparatus 110 through wired or wireless transmission (e.g., infrared transmission, ZigBee transmission, ultrawideband (UWB) transmission, WiFi transmission, radio frequency (RF) transmission, DLP light signal transmission or Bluetooth transmission). For example, as shown in FIG. 1, the signal transmitter 120 is externally connected to the video output apparatus 110, and controlled by the video output apparatus 110 in order to transmit the reference information SC generated by the video output apparatus 110 to the pair of shutter glasses 100. However, in another exemplary embodiment, the signal transmitter 120 may be embedded in the video output apparatus 110. Thus, the control circuit 106 may generate control signals S1 and S2 according to the reference information SC. For example, the reference information SC may be timing sequence of image output presented by the display screen 112, and the control circuit 106 may automatically generate needed control signals S1 and S2 according to the reference information SC. In other words, the video output apparatus 110 only provides a synchronization signal rather than the control information of the time points at which the first shutter lens 102 and the second shutter lens 104 should be open or close; instead, the control circuit 106 controls the timing when the first shutter lens 102 and the second shutter lens 104 should be open or close according to the synchronization signal provided by the video output apparatus 110. In an alternative design, reference information SC may be directly the control information of the first shutter lens 102 and the second shutter lens 104 (i.e., the video output apparatus 110 dominates the timing when the first shutter lens 102/the second shutter lens 104 should be open or close). In this way, the control circuit 106 generates corresponding control signals S1 and S2 simply according to the received reference information SC. Please note that what described above is only an exemplary embodiment, and is not meant to be a limitation to the present invention.

In one exemplary embodiment of the present invention, the video output apparatus 110 is operated under a higher refresh rate (e.g., 200 Hz, 240 Hz, 400 Hz or 480 Hz). In the following, a plurality of examples are given to provide further illustration for the control mechanism of the first shutter lens 102 and the second shutter lens 104.

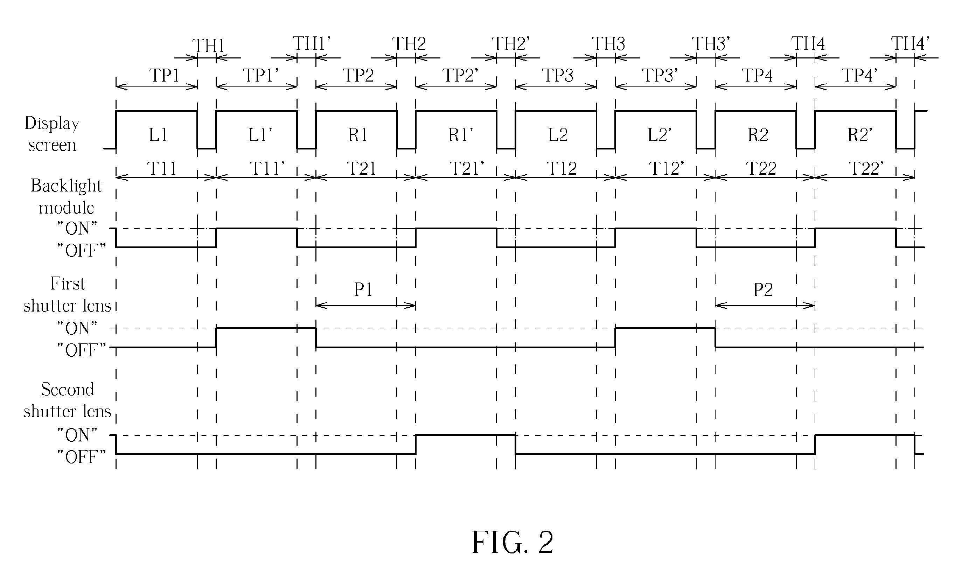

Please refer to FIG. 2, which is a sequence diagram of the first control method employed for controlling the pair of shutter glasses shown in FIG. 1. In the present exemplary embodiment, the video output apparatus 110 is operated under a higher refresh rate such as 240 Hz. However, the video output apparatus 110 may also be operated under even higher refresh rate such as 480 Hz. Thus, as to the same primary image, there are more secondary images included in the display output of the video output apparatus 110 operated under a higher refresh rate such as 480 Hz. However, no matter whether the video output apparatus 110 is operated under a refresh rate of 240 Hz or a higher refresh rate (e.g., 480 Hz), the control method of the pair of shutter glasses is basically the same. For clarity and brevity, the following paragraphs only provide a control method of the pair of shutter glasses 100 under a condition where the video output apparatus is operated under a refresh rate of 240 Hz. As shown in FIG. 2, the video output apparatus 110 displays a group of first images (e.g., (L1, L1') or (L2, L2')) and a group of second images (e.g., (R1, R1') or (R2, R2')), alternately. Besides, the video output apparatus 110 successively displays a primary first image (e.g., L1 or L2) and a secondary first image (e.g., L1' or L2') both included in the group of first images in order during a plurality of first image output periods (e.g., (T11, T11') or (T12, T12')), respectively, and successively displays a primary second image (e.g., R1 or R2) and a secondary second image (e.g., R1' or R2') both included in the group of second images in order during a plurality of second image output periods (e.g., (T21, T21') or (T22, T22')), respectively. It should be noted that one of the group of first images and the group of second images is a group of left-eye images, and the other one of the group of first images and the group of second images is a group of right-eye images. In other words, in one exemplary embodiment, the first images L1, L1', L2, and L2' stand for left-eye images, and the second images R1, R1', R2, and R2' stand for right-eye images; however, in another exemplary embodiment, the first images L1, L1', L2, and L2' stand for right-eye images, and the second images R1, R1', R2, and R2' stand for left-eye images.

Analogously, when the video output apparatus 110 is operated under a higher refresh rate such as 480 Hz, the video output apparatus 110 will also display a group of first images and a group of second images, alternately. For example, in one exemplary embodiment, the display order of the images is: L1, L1', R1, R1', L2, L2', R2, and R2', wherein L1 and L2 are primary first images, L1' and L2' are secondary first images, R1 and R2 are primary second images, and R1' and R2' are secondary second images. Therefore, groups of first images are composed of (L1, L1') and (L2, L2'), respectively, and groups of second images are composed of (R1, R1') and (R2, R2'), respectively. Besides, in the present exemplary embodiment, the number of the secondary first images and the number of the secondary second images are for illustrative purposes only. In another exemplary embodiment, the display order of the images is: L1, L1', L1", L1"', R1, R1', R1", R1"', wherein L1 is a primary first image, L1', L1" and L1"' are secondary first images, R1 is a primary second image, and R1', R1 and R1"' are secondary second images. Therefore, a group of first images is composed of (L1, L1', L1", L1"'), and a group of second images is composed of (R1, R1', R1", R1"'). Besides, in the present exemplary embodiment, the number of the secondary first images and the number of the secondary second images are for illustrative purposes only. Please note that, in an actual application, the backlight module 114 provides a brighter backlight to secondary first images L1, L1', L1", and L1"' and secondary second images R1, R1', R1", and R1"'. However, this is for illustrative purposes only, and is not meant to be a limitation to the present invention. Besides, in a case where the video output apparatus 110 (e.g., liquid crystal display, OLED display, plasma display, or display/projector of other display techniques) is operated under a higher refresh rate such as 240 Hz or above, regarding the same group of first/second images, the length of all secondary first/second images is longer than or equal to the length of the primary first/second images.

In one exemplary embodiment, the secondary first image is a primary first image in the same group of the first images that is displayed again, and the secondary second image is a primary second image in the same group of the second images that is displayed again. Each of the first image output periods and the second image output periods comprises an image driving period and an image stabilization period (e.g., the first image output period T11 comprises an image driving period TP1 and an image stabilization period TH1, the image output period T11' comprises an image driving period TP1' and an image stabilization period TH1', and so on). Please note that, according to the display technique applied, each image stabilization period may comprise a non-image driving period or an image maintaining period. For example, finishing transmitting an image driving signal within an image driving period or not transmitting any image driving signal within an image stabilization period would make the image now regarded as being in a stabilizing state. For example, regarding pixels such as liquid crystal cells of OLED units), a pixel may be regarded as operating in an image stabilization period starting from the time point when the pixel becomes stable due to being driven by the image driving signal transmitted within the image driving period. On the other hand, a pixel may also be regarded as operating in an image stabilization period starting from the time point when there is no image driving signal transmitted to the pixel.

As to the liquid crystal display, controlling the rotation of the liquid crystal cell is needed in order to reach the aim of controlling light transmission rate. Regarding the liquid crystal display operated under a lower refresh rate (e.g., 60 Hz or 120 Hz), the needed rotation time of liquid crystal cell is taken into consideration, and thus the image stabilization period immediately following the image driving period is mainly utilized for displaying stereo images. Regarding the liquid crystal display operated under a higher refresh rate (e.g., 240 Hz or 480 Hz), the length of each image stabilization period is shorter; however, in the same time period, the liquid crystal display will output more images under a higher refresh rate. Therefore, the image output periods corresponding to the secondary images may be utilized for providing stabilized images and opening the first shutter lens 102/the second shutter lens 104 in order to provide stereo images for the user. In brief, each primary image (e.g., L1, L2, R1 or R2 described above) is responsible for updating the content of the displayed previous image (i.e., the content of the previous primary first image). Therefore, before the current primary image to be displayed has totally replaced the displayed previous image, the output result of the display screen 112 (e.g., an LCD panel) comprises part of the current primary images and part of the previous primary image within the image driving period corresponding to the primary image to be displayed. In addition, the following secondary images (e.g., L1', L2', R1', R2', L1'-L1"' or R1'-R1"') are responsible for stabilizing images in order to provide stereo images for the user through the pair of shutter glasses 100.

Besides, in another exemplary embodiment, the secondary first image is a continuous output result of the primary first image included in the same group of first images. That is, within the image driving period corresponding to the primary image, the display screen 112 successively sets pixels according to the display data, wherein pixels are driven line by line from the top to the bottom in an image and pixel by pixel from the left to the right in each line of the image to thereby output the primary image to be displayed. Alternatively, according to a different placement setting or hardware design of the LCD panel, the display screen 112 may output the primary image to be displayed by successively setting pixels according to the display data, wherein the pixels are driven line by line from the bottom to the top in an image and pixel by pixel from the right to the left in each line in the image, or may be driven according to other pixel updating order). However, within the image driving period corresponding to the following secondary image, the display screen 112 does not perform display driving operation according to any display data, so the display screen 112 still continuously displays the content of the primary image due to the inherent characteristic of the LCD panel. Moreover, the secondary first image may also be a black image or an adjusted image that is generated by applying a fine-tuning adjustment, such as a compensation for the crosstalk of images, to the primary first image included in the same group of first images.

Besides, in yet another exemplary embodiment, the primary first/second image may also be a black image, and the backlight module 114 stays in the on-state within the image output period corresponding to the secondary first/second image in order to provide stereo images for the user.

The control circuit 106 controls the first shutter lens 102 to be switched between an on-state ("ON") and an off-state ("OFF"), and controls the second shutter lens 104 to be switched between an on-state ("ON") and an off-state ("OFF"). In the present exemplary embodiment, the control circuit 106 controls the first shutter lens 102 to stay in the on-state within the first image output period (e.g., T11' or T12') corresponding to the specific secondary first image (e.g., L1' or L2'), and stay in the off-state within the second image output period (e.g., T21 or T22) corresponding to the specific primary second image immediately following the specific secondary first image (e.g., R1 or R2). As shown in FIG. 2, in the present exemplary embodiment, the first shutter lens 102 is switched from the off-state to the on-state from the start point of the first image output period corresponding to the specific secondary first image, and is switched from the on-state to the off-state at the end point of the first image output period corresponding to the specific secondary first image. Afterwards, the first shutter lens 102 maintains at the off-state from the start point to the end point of the second image output period corresponding to the following specific primary second image. Moreover, the control circuit 106 further controls the second shutter lens 104 to stay in the off-state within the second image output period (e.g., T21 or T22) corresponding to the specific primary second image (e.g., R1 or R2), and stay in the on-state within the second image output period (e.g., T21' or T22') corresponding to the specific secondary second image (e.g., R1' or R2') immediately following the specific primary second image. As shown in FIG. 2, in the present exemplary embodiment, the shutter lens 104 maintains at the off-state from the start point to the end point of the second image output period corresponding to the specific primary second image, is switched from the off-state to the on-state within the second image output period corresponding to the following specific secondary second image, and then is switched from the on-state to the off-state at the end point of the second image output period corresponding to the specific secondary second image. Besides, as shown in the figure, the first shutter lens 102 and the second shutter lens 104 simultaneously stay in the off-state only within a single continuous time period (e.g., P1 or P2) of the second image output period (e.g., T21 or T22) corresponding to the specific primary second image (e.g., R1 or R2).

Please note that, FIG. 2 only shows that the control circuit 106 controls the first shutter lens 102 and the second shutter lens 104 during an operating time period including, for example, image output periods T11-T22'. In fact, the control circuit 106 will repeat the same control mechanism mentioned above for controlling the first shutter lens 102 and the second shutter lens 104 to be switched between the on-state and the off-state by referring to the same glasses cycle (i.e., the cycle that the left eye and the right eye respectively view the image once) or different glasses cycles during the previous operating period(s) (e.g., the image output period(s) before the image output period T11) and the following operating period(s) (e.g., the image output period(s) after the image output period T22').

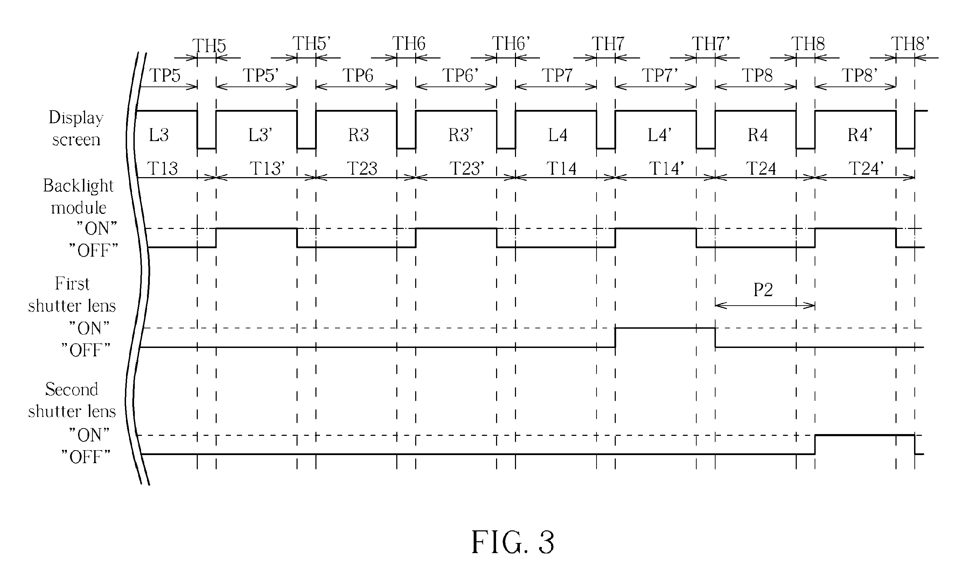

As to the operation with mixed glasses cycles, please refer to FIG. 2 in conjunction with FIG. 3. FIG. 3 is a continued sequence diagram of the operation in FIG. 2 based on the concept of using mixed different glasses cycles. As shown in FIG. 3, the original glasses cycle is equal to a sum of image output periods of four images (e.g., T11+T11'+T21+T21'). However, after the second image output period T21' ends, the original glasses cycle is expanded to a sum of image output periods of eight images (e.g., T12+T12'+T22+T22'+ T13+T13'+T23+T23'). In the present exemplary embodiment, the first shutter lens 102 is switched from the off-state to the on-state at the start point of the following first image output period T14' corresponding to the secondary first image L4', and the second shutter lens 104 is switched from the off-state to the on-state at the start point of the second image output period T24' corresponding to the secondary second image R4'. Please note that using a sum of image output periods of eight images as another glasses cycle is for illustrative purposes only, and is not meant to be a limitation to the present invention. In fact, the number of image output periods covered in one glasses cycle may be adjusted according to the actual application requirement/consideration. Besides, in the aforementioned exemplary embodiment of mixed glasses cycles, the same control mechanism is repeated in another longer glasses cycle. However, in this longer glasses cycle, other control mechanism(s) may be employed. Thus, within the time period (e.g., T13-T23') that the original control mechanism has no control over the on/off-state of the shutter lenses, other control mechanism(s) may be active to control the on/off-state of the shutter lenses.

As described above, before the present primary image to be displayed has totally replaced the displayed previous image, the output result, which is to be displayed within the image driving period corresponding to present primary image, of the display screen 112 (e.g., an LCD panel) comprises part of the present primary image and part of the previous primary image. Thus, in order to block trash images from reaching user's eyes, in the present exemplary embodiment, in addition to the control of the first shutter lens 102 and the second shutter lens 104, the backlight module 114 stays in the on-state ("ON") only within the image driving period TP1', TP2', TP3', TP4' respectively corresponding to the secondary first and second image. In other words, the backlight module 114 is disabled to stay in the off-state ("OFF") within the image driving period TP1, TP2, TP3, TP4 respectively corresponding to the primary first and second images. Therefore, in the present exemplary embodiment, the backlight module 114 stays in the on-state only when the first shutter lens 102 and the second shutter lens 104 stay in the on-state, so the aforementioned single continuous time period is at least partly overlapped with the backlight-off period in which the backlight module 114 stays in the off-state. In short, by a proper control of the first shutter lens 102, the second shutter lens 104 and the backlight module 114, the system may provide a reasonable image quality for the user when the user is viewing stereo images presented by the video output apparatus.

Please note that, in another exemplary embodiment, the backlight module 114 is enabled to stay in the on-state within the image driving period TP1', TP2', TP3', TP4' respectively corresponding to the secondary first and second images; additionally, the backlight-on period of the backlight module 114 may also slightly expand forward or shrink backward from the start point of the image driving periods TP1', TP2', TP3', TP4' respectively corresponding to the secondary first and second images, and/or slightly expand backward or shrink forward at the end point of the image driving periods TP1', TP2', TP3', TP4' respectively corresponding to the secondary first and second images. For example, an exemplary backlight-on period expansion is shown in the figure by dotted lines. Taking the secondary first image L1 for example, in the first exemplary embodiment, the backlight-on period of the backlight module 114 only includes the image driving period TP1', in the second exemplary embodiment, the backlight-on period of backlight module 114 includes the image driving period TP1' and the image stabilization period TH1', while in the third exemplary embodiment, the backlight-on period of the backlight module 114 includes the image driving period TP1' and the image stabilization periods TH1 and TH1'. In other words, the backlight module 114 may be switched from the off-state to the on-state before the start point of the image driving period corresponding to the secondary first image/the secondary second image, and/or be switched from the on-state back to the off-state after the end point of the image driving period corresponding to the secondary first image/secondary second image. According to above disclosure, the backlight-on period of the backlight module 114 staying in the on-state may cover and extend beyond the image driving period corresponding to the secondary first image/secondary second image, wherein the backlight module 114 stays in the on-state within the image driving period corresponding to the secondary first image/secondary second image, and stays in the off-state within the image stabilization period corresponding to the adjacent primary first image/primary second image. A length of a time period in which the backlight module 114 stays in the off-state within the adjacent image stabilization period is shorter than or equal to a length of the adjacent image stabilization period.

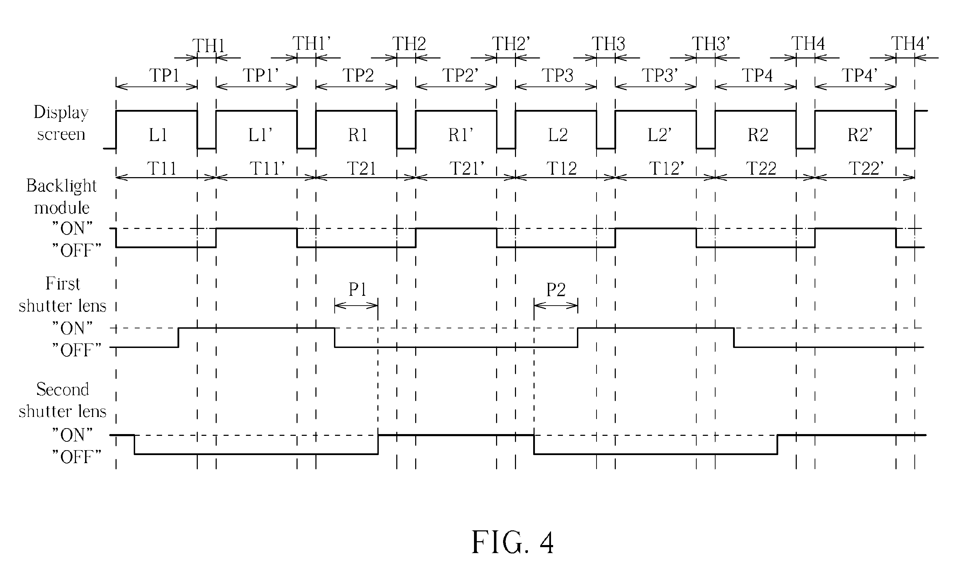

As described above, the first shutter lens 102 is switched from the off-state to the on-state at the start point of the first image output period corresponding to the specific secondary first image, and is switched from the on-state to the off-state at the end point of the first image output period corresponding to the specific secondary first image. The second shutter lens 104 is switched from the off-state to the on-state at the start point of the second image output period corresponding to the specific secondary second image, and is switched from the on-state to the off-state at the end point of the second image output period corresponding to the specific secondary second image. However, it is not meant to be a limitation to the present invention. Please refer to FIG. 4. FIG. 4 is a sequence diagram of the second control method employed for controlling the pair of shutter glasses shown in FIG. 1. In the present exemplary embodiment, the first shutter lens 102 is switched from the off-state to the on-state before the start point of the first image output period (e.g., T11' or T12') corresponding to the specific secondary first image (e.g., L1' or L2'), and is switched from the on-state to the off-state after the end point of the first image output period (e.g., T11' or T12') corresponding to the specific secondary first image (e.g., L1' or L2'). The second shutter lens 104 is switched from the off-state to the on-state before the start point of the second image output period (e.g., T21' or T22') corresponding to the specific secondary second image (e.g., R1' or R2'), and is switched from the on-state to the off-state after the end point of the second image output period (e.g., T21' or T22') corresponding to the specific secondary second image (e.g., R1' or R2'). Please note that, like the exemplary embodiment shown in FIG. 2, the first shutter lens 102 and the second shutter lens 104 in this exemplary embodiment simultaneously stay in the off-state only within a single continuous time period (e.g., P1 or P2) of the second image output period (e.g., T21 or T22) corresponding to the specific primary second image (e.g., R1 or R2). Besides, the aforementioned single continuous time period, such as P1 or P2, is at least partly overlapped with the backlight-off period in which the backlight module 114 stays in the off-state. In the present exemplary embodiment, the single continuous time period in which the first shutter lens 102 and the second shutter lens 104 simultaneously stay in the on-state totally lies within the backlight- off period of the backlight module 114.

Similarly, in order to prevent trash images from coming into user's eyes, the present exemplary embodiment controls the first shutter lens 102 and the second shutter lens 104 as well as the backlight module 114, wherein the backlight module 114 is enabled to stay in the on-state ("ON") only within the image driving periods TP1, TP2, TP3, and TP4 respectively corresponding to the secondary first and second images. By a proper control of the first shutter lens 102, the second shutter lens 104 and the backlight module 114, the system may provide a reasonable image quality for the user when the user is viewing stereo images presented by the video output apparatus 110. Moreover, the backlight module 114 is disabled to stay in the off-state ("OFF") within the image driving periods TP1', TP2', TP3', and TP4' respectively corresponding to the primary first and second images. Due to lack of backlight source needed, the display output presented by the display screen 112 within the image output periods T11, T21, T12, and T22 will not be seen by user's eyes. Thus, though the first shutter lens 102 and the second shutter lens 104 are open (i.e., stay in the on-state) within image output periods T11, T21, T12, and T22, they have no effect on user's viewing of stereo images. However, since the length of the shutter-on period of the first shutter lens 102/the second shutter lens 104 is increased, the ambient brightness perceived by the user is increased when compared with the perceived ambient brightness in the exemplary embodiment shown in FIG. 2. Besides, since the shutter-on period of the first shutter lens 102/the second shutter lens 104 is increased, the length of the shutter-off period of the first shutter lens 102/the second shutter lens 104 is decreased accordingly, thereby reducing the power consumption of the pair of shutter glasses 100.

Moreover, in another exemplary embodiment, the backlight module 114 is enabled to stay in the on-state within the image driving periods TP11, TP2', TP3', and TP4'; additionally, the backlight-on period of the backlight module 114 may also slightly expand forward or shrink backward at the start point of the image driving periods TP11, TP2', TP3', and TP4', and/or slightly expand backward or shrink forward at the end point of the image driving periods TP11, TP2', TP3', and TP4'. These alternative designs all fall within the scope of the present invention.

Besides, the above disclosure directed to the backlight module 114 is only utilized to assist in illustrating the control mechanism of the pair of shutter glasses 100 of the present invention. That is, whatever the design of the backlight-on period of the backlight module 114 is, the display system which allows the user to view stereo images falls within the scope of the present invention as long as the operations of switching the first shutter lens 102 and the second shutter lens 104 between the on-state and the off-state fall into the scope of the appended claims.

Please note that the exemplary embodiment shown in FIG. 4 is for illustrative purposes only, and is not meant to be a limitation to the present invention. That is, changes/modifications made to the exemplary embodiment shown in FIG. 4 are feasible. In other words, it is not necessary to make the shutter-on periods of the first shutter lens 102 and the second shutter lens 104 expand forward/backward together. For example, any control mechanism would be regarded as falling within the scope of the present invention as long as one of the operations listed below or a combination of multiple operations selected from the operations listed below is employed: making the first shutter lens 102 be switched from the off-state to the on-state before the start point of the image driving period corresponding to the specific secondary first image, making the first shutter lens 102 be switched from the on-state to the off-state after the end point of the image driving period corresponding to the secondary first image, making the second shutter lens 104 be switched from the off-state to the on-state before the start point of the image driving period corresponding to the specific secondary second image, and making the second shutter lens 104 be switched from the on-state to the off-state after the end point of the image driving period corresponding to the secondary second image.

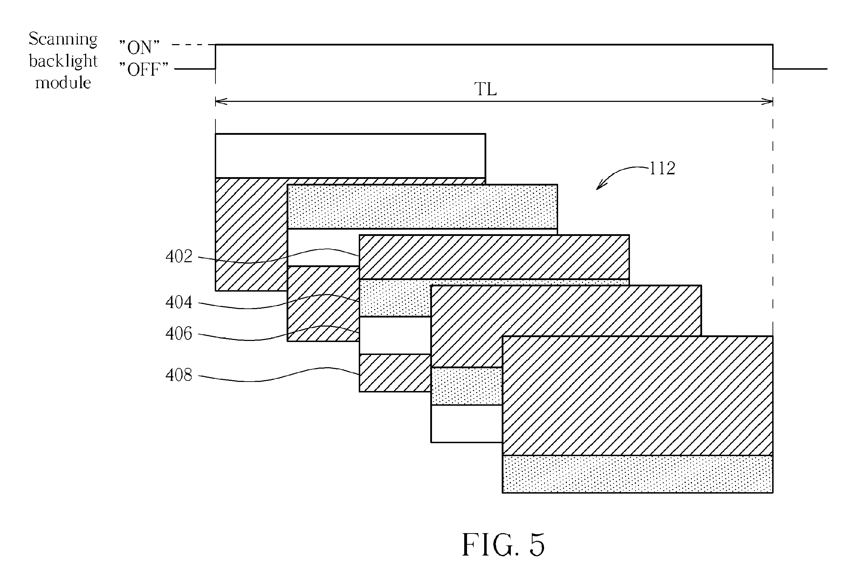

In the exemplary embodiment described above, the backlight module 114 may be realized by a plain backlight module. That is, when the backlight module 114 is enabled, all pixels in the display screen 112 receive backlight offered by the backlight module 114. However, it is not meant to be a limitation to the present invention. The backlight module 114 may be realized by a scanning backlight module. Please refer to FIG. 5, which is a diagram illustrating an operation of the scanning backlight module. All pixels in the display screen 112 may be categorized into several display areas, and the scanning backlight module offers backlight to the display areas in turn. Therefore, the display areas with no backlight applied thereto may be utilized for hiding the shadow-trail and image crosstalk generated by the display screen 112 (e.g., an LCD panel). As shown in FIG. 5, the display screen 112 is separated into several display areas from the top to the bottom, such as four display areas 402, 404, 406, and 408. Therefore, during the backlight-on period TL in which the scanning backlight module stays in the on-state, the display areas 402, 404, 406, and 408 are successively provided with backlight as shown by the blank blocks in FIG. 5. Compared with the backlight-on period of the plain backlight module, the backlight-on period of the scanning backlight module may be longer. For example, the backlight-on period of the scanning backlight module is longer than the length of the first image output period/second image output period corresponding to the secondary first image/secondary second image, and close to (shorter than) the sum of the length of the first image output period/the second image output period corresponding to the secondary first image/secondary second image and the length of the second image output period/ first image output period corresponding to the primary second image/primary first image immediately following the secondary first image/secondary second image. However, it is not meant to be a limitation to the present invention.

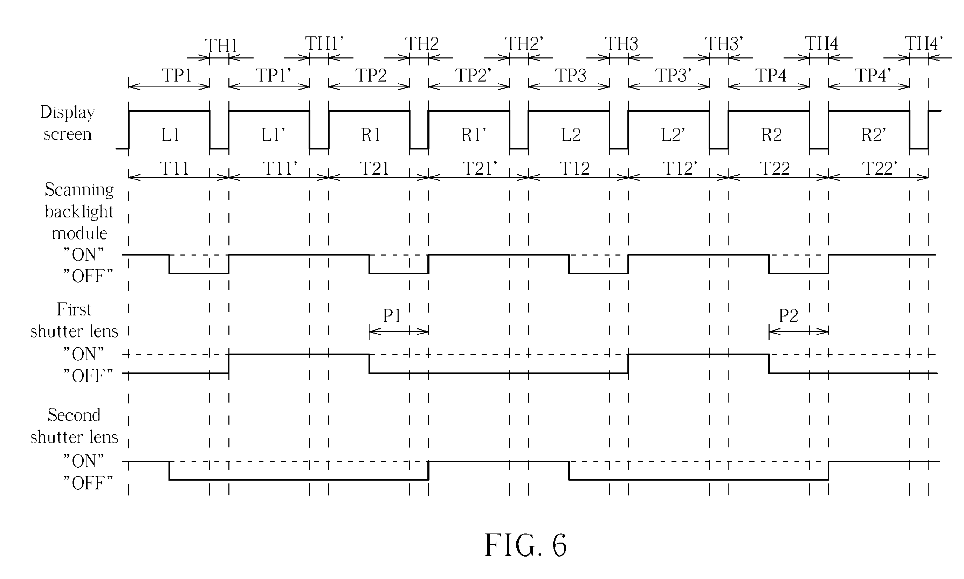

When the scanning backlight module is employed in the video output apparatus 110, the control mechanism employed by the control circuit 106 for controlling the first shutter lens 102 and the second shutter lens 104 needs to be properly adjusted according to the backlight-on period in which the scanning backlight module stays in the on-state. Please refer to FIG. 6, which is a sequence diagram of the third control method employed for controlling the pair of shutter glasses shown in FIG. 1. In the present exemplary embodiment, the backlight module 114 is a scanning backlight module. As shown in the figure, the backlight module 114 is enabled within the image output periods T11', T21', T12', and T22' respectively corresponding to the secondary first and second images as well as time periods within the image output periods T21, T12, and T22 corresponding to the following primary first and second images. Please note that, though the backlight module 114 is enabled to stay in the on-state in the time periods within the image output periods T21, T12, and T22 respectively corresponding to the primary first and second images, no backlight is applied to a top half of the display screen 112 while the primary first image and the primary second image have pixel data updated from the top to the bottom during a first half of each of the image output periods T21, T12, and T22, as shown in FIG. 5. Therefore, the user will not see the updated pixel data. In other words, though the output result presented by the display screen 112 within the image driving period corresponding to the primary image to be displayed would include part of the current primary image to be displayed and part of the displayed previous primary image before the current primary image to be displayed has totally replaced the displayed previous image, the trash image will not reach user's eyes under a proper control of the scanning backlight module, the first shutter lens and the second shutter lens, however. As a result, the system may provide a reasonable image quality for the user when the user is viewing stereo images presented by the video output apparatus.

In the present exemplary embodiment, the backlight module 114 stays in the on-state only when the first shutter lens 102 and the second shutter lens 104 stay in the on-state; besides, the first shutter lens 102 and the second shutter lens 104 simultaneously stay in the off-state only within a single continuous time period (e.g., P1 or P2) within the second image output period (e.g., T21 or T22) corresponding to the specific primary second image (e.g., R1 or R2). Moreover, as shown in the figure, the length of the continuous backlight-on period that the backlight module 114 stays in the on-state (e.g., the backlight-on period TL shown in FIG. 5) must be shorter than an image cycle (e.g., T11+T11', T21+T21', T12+T12' or T22+T22') for a single eye (left eye/right eye).

Please note that, in another exemplary embodiment, the backlight module 114 is enabled to stay in the on-state within the image output periods T11', T21', T12', and T22' respectively corresponding to the secondary first and second images and also stay in the on-state in time periods within the image output periods T21, T12, and T22 corresponding to the following primary first and second images; additionally, the backlight-on periods of the backlight module 114 may also slightly expand forward or shrink backward at the start points of the image output periods T11', T21', T12', and T22' (i.e., start points of image driving periods TP1', TP2', TP3', and TP4') respectively corresponding to the secondary first and second images. For example, the backlight module 114 may be switched from the off-state to the on-state before the start points of the image output periods T11', T21', T12', and T22' (i.e., start points of the image driving periods TP1', TP2', TP3', and TP4') corresponding to the secondary first and second images. In other words, the continuous backlight-on period in which the backlight module 114 stays in the on-state, such as the backlight-on period TL shown in FIG. 5, may be expanded forward and/or backward.

Besides, FIG. 6 only shows that the control circuit 106 controls the first shutter lens 102 and the second shutter lens 104 during an operating time period including, for example, image output periods T11-T22'). In fact, the control circuit 106 will repeat the same control mechanism mentioned above to control the first shutter lens 102 and the second shutter lens 104 to be switched between the on-state and the off-state by referring to the same glasses cycle (i.e., the cycle that left eye and right eye respectively view the image once) or different glasses cycles within the previous operating time period(s) (e.g., the image output period(s) before the image output period T11) and the following operating time period(s) (e.g., the image output period(s) after the image output period T22').

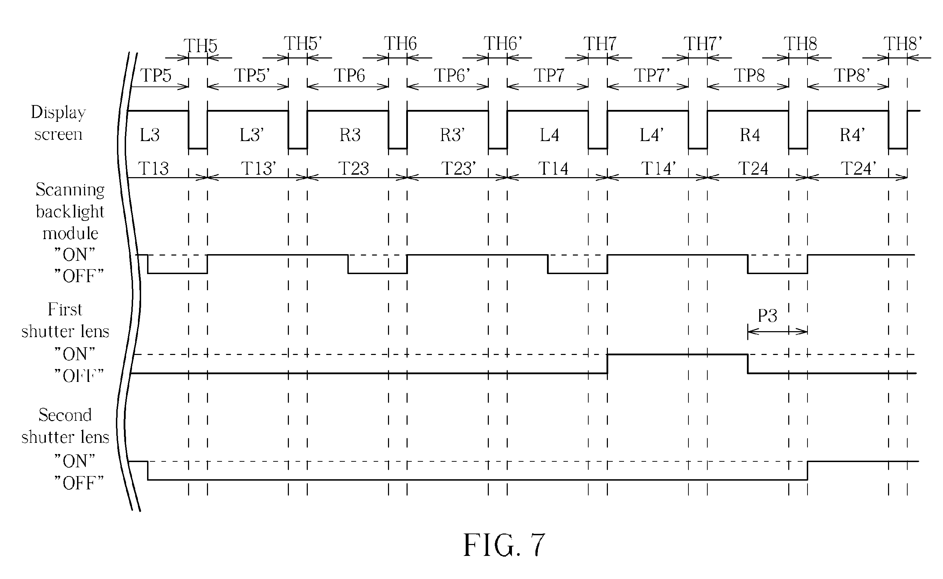

As to the operation with mixed glasses cycles, please refer to FIG. 6 in conjunction with FIG. 7. FIG. 7 is a continued sequence diagram of the operation in FIG. 6 based on the concept of using mixed glasses cycles. As shown in FIG. 6, the original glasses cycle is equal to a sum of image output periods of four images (e.g., T11+T11' or T21+T21'). However, after the image stabilization period T21' ends, the glasses cycle is expanded to a sum of image output periods of eight images (e.g., T12+T12'+T22+T22'+T13+T13'+T23+T23'). In the present exemplary embodiment, the first shutter lens 102 is switched from the off-state to the on-state at the start point of the first image output period T14' corresponding to the secondary first image L4', and the second shutter lens 104 is switched from the off-state to the on-state at the start point of the second image output period T24' corresponding to the following secondary second image R4'. Please note that using a sum of image output periods of eight images as another glasses cycle is for illustrative purposes only, and is not meant to be a limitation to the present invention. In fact, the number of image output periods covered in on glasses cycle may be adjusted according to the actual application requirement/consideration. Besides, in the exemplary embodiment of mixed different glasses described above, the same control mechanism is repeated in another longer glasses cycle. However, in this longer glasses cycle, other control mechanism(s) may be employed. Thus, within the time period that original control mechanism has no control over the on/off-state of the shutter lenses (e.g., T13-T23'), other control mechanism(s) may be active to control the on/off-state of the shutter lenses.

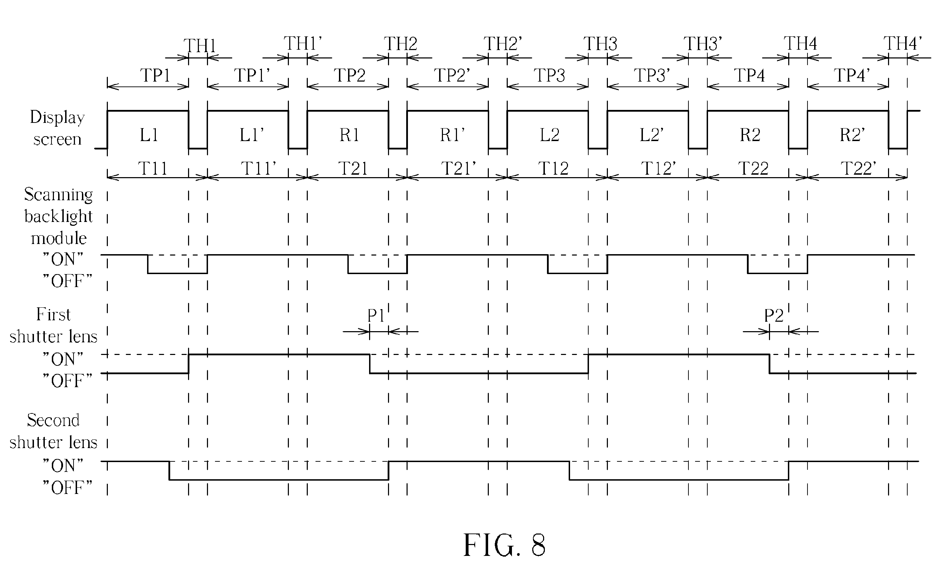

As shown in FIG. 6, the first shutter lens 102 is switched from the off-state to the on-state at the start point of the first image output period corresponding to the specific secondary first image, and is switched from the on-state to the off-state after the end point of the first image output period corresponding to the specific secondary first image. Besides, the second shutter lens 104 is switched from the off-state to the on-state before the start point of the second image output period corresponding to the specific secondary second image, and is switched from the on-state to the off-state at the end point of the second image output period corresponding to the specific secondary second image. However, it is not meant to be a limitation to the present invention. That is, like the exemplary embodiment shown in FIG. 4, the shutter-on period in which the first shutter lens 102 and the second shutter lens 104 stay in the on-state, as shown in the exemplary embodiment in FIG. 6, may be expanded forward and/or backward to thereby increase the ambient brightness the user feels and decrease the power consumption of the pair of shutter glasses 100. Please refer to FIG. 8, which is a sequence diagram of the fourth control method employed for controlling the pair of shutter glasses shown in FIG. 1. Similarly, like the exemplary embodiment shown in FIG. 6, the first shutter lens 102 and the second shutter lens 104 simultaneously stay in the off-state only within a single continuous time period (e.g., P1 or P2) of the second image output period (e.g., T21 or T22) corresponding to the specific primary second image (e.g., R1 or R2). Besides, the aforementioned single continuous time period (e.g., P1 or P2) is at least partly overlapped with the backlight-off period in which the backlight module 114 stays in the off-state. In the present exemplary embodiment, the single continuous time period in which the first shutter lens 102 and the second shutter lens 104 simultaneously stay in the on-state totally lies within the backlight-off period of backlight module 114. Please note that the exemplary embodiment in FIG. 8 is for illustrative purposes only, and is not meant to be a limitation to the present invention. Changes/modifications made to the exemplary embodiment shown in FIG. 8 are feasible. For example, it is not necessary to make the shutter-on periods of the first shutter lens 102 and the second shutter lens 104 expand forward and/or backward together. These alternative designs all fall within the scope of the present invention.

Besides, within the image output periods respectively corresponding to the secondary first and second images (e.g., the image driving periods TP1', TP2', TP3', and TP4'), the user is allowed to view images mainly by the enabling of the backlight module 114. Regarding the first shutter lens 102/the second shutter lens 104 within the shutter-on period, the liquid crystal cells in the liquid crystal layer of the first shutter lens 102/the second shutter lens 104 start rotating before the image output period (e.g., the image driving period) corresponding to the secondary first image/the secondary second image for making the first shutter lens 102/the second shutter lens 104 be switched from the off-state to the on-state, and start rotating after the image output period (e.g., the image driving period) corresponding to the secondary first image/the secondary second image for making the first shutter lens 102/the second shutter lens 104 be switched from the on-state to the off-state. In this way, when the user views images within the image output periods (e.g., image driving periods) respectively corresponding to the secondary first and second images, the present invention may further decrease the brightness attenuation induced due to the response time period (i.e., the rotating process) of the liquid crystal cells.

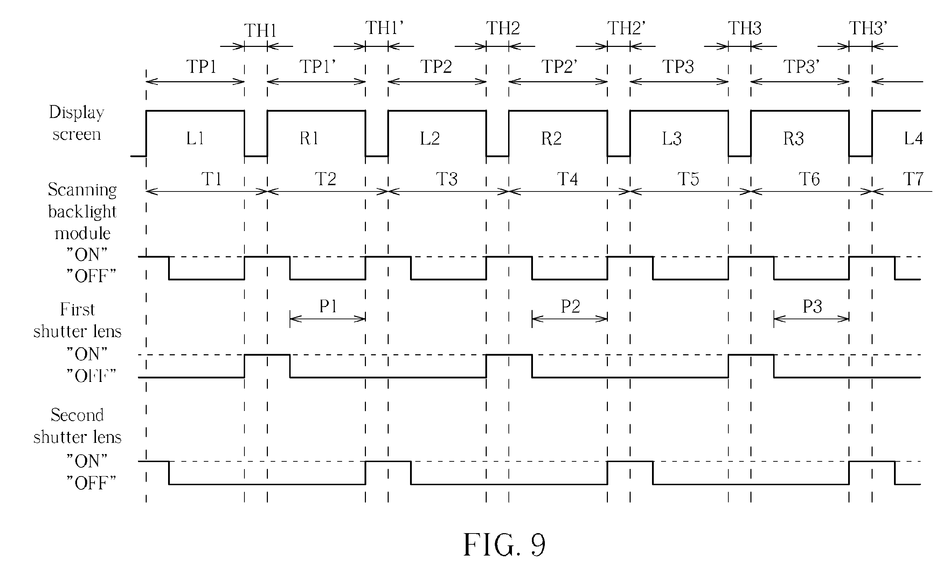

According to the exemplary embodiments shown in FIG. 6 and FIG. 8, the pair of shutter glasses control mechanism of the present invention may be utilized for controlling the video output apparatus 110 which is operated under a higher refresh rate (e.g., 240 Hz or 480 Hz) and adopts a scanning backlight module. However, the pair of shutter glasses control mechanism of the present invention may also control the video output apparatus 110 which is operated under a lower refresh rate (e.g., 60Hz, 96Hz, 100Hz, 110Hz or 120Hz) and adopts a scanning backlight module. Please refer to FIG. 9, which is a sequence diagram of the fifth control method employed for controlling the pair of shutter glasses shown in FIG. 1. In the present exemplary embodiment, the backlight module 114 is a scanning backlight module, and the video output apparatus 110 is operated under a lower refresh rate such as 60 Hz or 120 Hz. As shown in FIG. 9, the video output apparatus 110 respectively outputs a first image (e.g., L1, L2, L3 or L4) and a second image (e.g., R1, R2 or R3) during a plurality of image output periods (e.g., T1-T7), alternately, wherein one of the first image and the second image is a left-eye image, and the other one of the first image and the second image is a right-eye image. In other words, in one exemplary embodiment, the first images L1, L2, L3 and L4 stand for left-eye images and the second images R1, R2 and R3 stand for right-eye images; however, in another exemplary embodiment, the first images L1, L2, L3 and L4 stand for right-eye images and the second images R1, R2 and R3 stand for left-eye images. Besides, as shown in the figure, each image output period comprises an image driving period and an image stabilization period. Please note that, according to the display technique used, each image stabilization period may probably comprises a non-image-driving period or an image maintaining period. For example, the image output period T1 comprises an image driving period TP1 and an image stabilization period TH1, the image output period T2 comprises an image driving period TP1' and an image stabilization period TH1', and so on. Within each image driving period, the display screen 112 (e.g., an LCD panel) successively sets pixels according to the display data, wherein the pixels are driven line by line from the top to the bottom in an image and pixel by pixel from the left to the right in each line of the image to thereby output the image to be displayed now. Alternatively, according to a different placement setting or hardware design of the LCD panel, the display panel 112 may output the image to be displayed by successively setting pixels according to the display data, wherein the pixels are driven line by line from the bottom to the top in an image and pixel by pixel from the right to the left in each line of the image, or may be driven according to other pixel updating sequence. In short, the display screen 112 will replace the displayed previous image with a current image to be displayed. Therefore, before the current image to be displayed has totally replaced the displayed previous image, the display screen 112 will output an image that comprises part of the current image and part of the previous image within the image driving period. In addition, within the following image stabilization period, the display screen 112 will wait for the image stabilization of the current image to be displayed. For example, the display screen 112 will not drive pixels according to any display date. That is, each image stabilization period may be a vertical blanking interval (VBI).

The control circuit 106 controls the first shutter lens 102 to be switched between an on-state ("ON") and an off-state ("OFF"), and controls the second shutter lens 104 to be switched between an on-state ("ON") and an off-state ("OFF"). In this exemplary embodiment, the control circuit 106 controls the first shutter lens 102 to stay in the on-state within the image stabilization period (e.g., TH1, TH2 or TH3) corresponding to a specific first image (e.g., L1, L2 or L3) and stay in the off-state within the image driving period (e.g., TP1', TP2' or TP3') corresponding to a specific second image (e.g., R1, R2 or R3) immediately following the specific first image, as shown in FIG. 9. In the present exemplary embodiment, the first shutter lens 102 is switched from the off-state to the on-state at the start point of the image stabilization period, and is switched from the on-state to the off-state after the end point of the image stabilization period. In addition, the control circuit 106 controls the second shutter lens 104 to stay in the off-state within the image driving period (e.g., TP1', TP2' or TP3') corresponding to the specific second image (e.g., R1, R2 or R3) and stay in the on-state within the image stabilization period (e.g., TH1', TH2' or TH3') corresponding to the same specific second image (e.g., R1, R2 or R3). The second shutter lens 104 stays in the off-state within the image driving period, is switched from the off-state to the on-state at the start point of the following image stabilization period, and then is switched from the on-state to the off-state after the end point of the image stabilization period. The first shutter lens 102 and the second shutter lens 104 both stay in the off-state only within a single continuous time period (e.g., P1 or P2) of the image driving period (e.g., TP1' or TP2') corresponding to the specific second image (e.g., R1 or R2). Besides, the aforementioned single continuous time period (e.g., P1 or P2) is at least partly overlapped with the backlight off period in which the backlight module 114 stays in the off-state. In the present exemplary embodiment, they are totally overlapped with each other.

Please note that FIG. 9 only shows that the control circuit 106 controls the first shutter lens 102 and the second shutter lens 104 during an operating time period including, for example, image output periods T1-T6). In fact, the control circuit 106 will repeat the same control mechanism mentioned above to control the first shutter lens 102 and the second shutter lens 104 to be switched between the on-state to the off-state by referring to the same glasses cycle (i.e., the cycle that left eye and right eye respectively view the image once) or different glasses cycles within the previous operating time period(s) (e.g., the image output period(s) before the image output period T1) and the following operating time period(s) (e.g., the image output period(s) after the image output period T6).

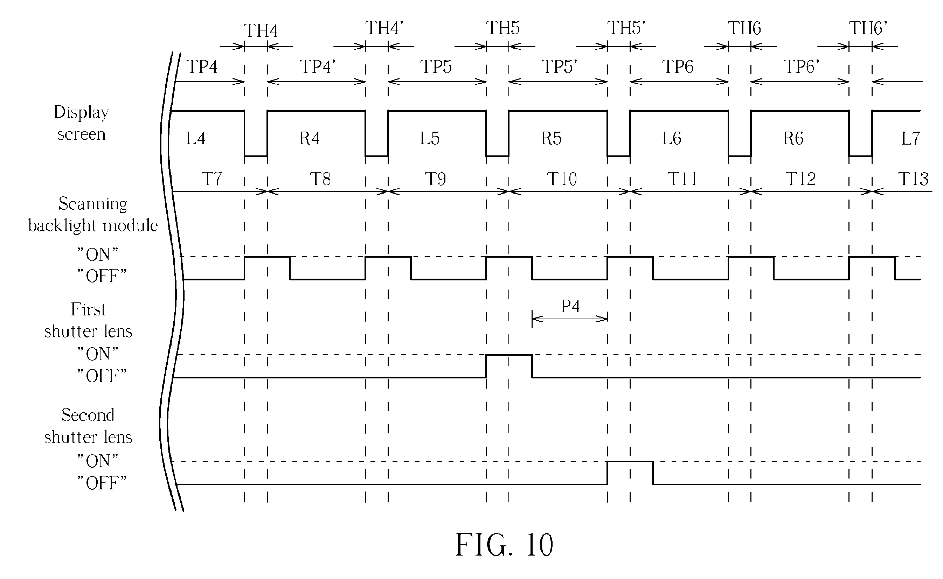

As to the operation with mixed glasses cycles, please refer to FIG. 9 in conjunction with FIG. 10. FIG. 10 is a continued sequence diagram of the operation in FIG. 9 based on the concept of using mixed glasses cycles. As shown in FIG. 9, the previous glasses cycle is equal to a sum of image output periods of two images (e.g., T1+T2 or T3+T4). However, after the image stabilization period TH2' ends, the glasses cycle is expanded to a sum of image output periods of four images (e.g., T5+T6+T7+T8 or T9+T10+T11 +T12). In the present exemplary embodiment, the first shutter lens 102 is switched from the off-state to the on-state at the start point of the image stabilization period TH5 corresponding to the first image L5, and the second shutter lens 104 is switched from the off-state to the on-state within the start point of image stabilization period TH5' corresponding to the second image R5. Please note that using a sum of image output periods of four images as another glasses cycle is for illustrative purposes only, and is not meant to be a limitation to the present invention. In fact, the number of image output periods of glasses cycle covered in one glasses cycle may be adjusted according to the actual application requirement/consideration. Besides, in the exemplary embodiment of using mixed different glasses described above, the same control mechanism is repeated in another longer glasses cycle. However, in this longer glasses cycle, other control mechanism(s) may be employed. Thus, within the time period that the original control mechanism has no control over the on/off-state of the shutter lenses (e.g., T7-T8), other control mechanism(s) may be active to control the on/off-state of the shutter lenses.

As described above, before the current image to be displayed has totally replaced the displayed previous image, the output result of the display screen 112 (e.g., an LCD panel) within the image driving period corresponding to the current image to be displayed comprises part of the current image and part of the previous image. Therefore, in order to prevent the trash image from reaching user's eyes, in the present exemplary embodiment, the backlight module 114 is enabled to stay in the on-state only when the first shutter lens 102 and the second shutter lens 104 both stay in the on-state. Please note that, though the backlight module 114 is enabled to stay in the on-state in the time periods within the image driving periods TP1-TP3 and TP1'-TP3' respectively corresponding to the first and second images, no backlight is applied to a top half of the display screen 112 while the first and second images have pixel data updated from the top to the bottom during a first half of the image driving periods TP1-TP3 and TP1'-TP3', as shown in FIG. 5. Therefore, the user cannot see the updated pixel data. In other words, by controlling the scanning backlight module, the first shutter lens and the second shutter lens properly, the trash image will not reach user's eyes. As a result, the system may provide a reasonable image quality for the user when the user views stereo images presented by the video output apparatus.

Please note that, in another exemplary embodiment, the backlight module 114 keeps staying in the on-state within each of the image stabilization periods TH1, TH1', TH2, TH2', and TH3 and is switched from the on-state to the off-state at an end point of a certain time period immediately following the end point of each of the image stabilization periods TH1, TH1', TH2, TH2', TH3, and TH3'; additionally, the backlight-on periods of the backlight module 114 may also slightly expand forward or shrink backward at the start points of the image stabilization periods TH1, TH1', TH2, TH2', Th3, and TH3'. For example, the backlight module 114 may be switched from the off-state to the on-state before the start point of the image stabilization period. In summary, the backlight-on period of the backlight module 114 may expand forward at the start point of the image stabilization period and/or expand backward at the end point of the image stabilization period, and the length of the increment generating by expanding the original backlight-on period forward/backward depends on the design requirement. That is, by properly collaborating with the control mechanism used for controlling the pair of shutter glasses 100, the backlight module 114 may stay in the on-state continuously or be switched between the on stage and the off-state alternately.

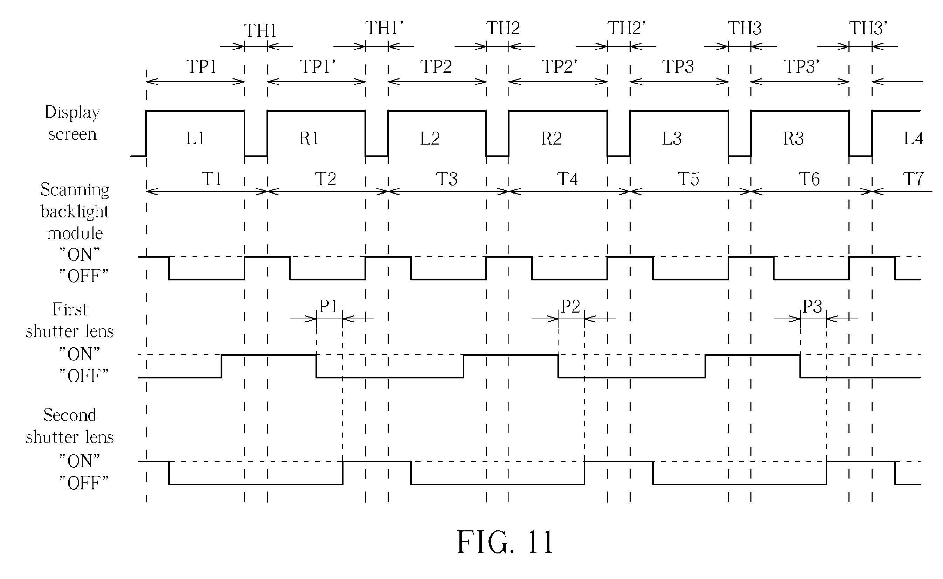

As shown in FIG. 9, the first shutter lens 102 is switched from the off-state to the on-state at the start point of the image stabilization period corresponding to the specific first image, and is switched from the on-state to the off-state after the end point of the image stabilization period. The second shutter lens 104 is switched from the off-state to the on-state at the start point of the image stabilization period corresponding to the specific second image, and is switched from the on-state to the off-state after the end point of the image stabilization period. However, it is not meant to be a limitation to the present invention. That is, like the exemplary embodiment shown in FIG. 4, the shutter-on period in which the first shutter lens 102/the second shutter lens 104 stays in the on-state, as shown in the exemplary embodiment in FIG. 9, may also be expanded forward and/or backward to thereby increase the ambient brightness the user feels and decrease the power consumption of the pair of shutter glasses 100. Please refer to FIG. 11, which is a sequence diagram of the sixth control method employed for controlling the pair of shutter glasses shown in FIG. 1. Similarly, like the exemplary embodiment shown in FIG. 9, the first shutter lens 102 and the second shutter lens 104 both stay in the off-state only within a single continuous time period (e.g., P1, P2 or P3) of the image driving period (e.g., TP1', TP2' orTP3') corresponding to the specific second image (e.g., R1, R2 or R3). Besides, the aforementioned single continuous time period (e.g., P1, P2 or P3) is at least partly overlapped with the backlight-off period that the backlight module 114 stays in the off-state. In the present exemplary embodiment, the single continuous time period when the first shutter lens 102 and the second shutter lens 104 both stay in the on-state totally lies within the backlight-off period of the backlight module 114.

Please note that the exemplary embodiment shown in FIG. 11 is for illustrative purposes only, and is not meant to be a limitation to the present invention. That is, changes/modifications made to the exemplary embodiment shown in FIG. 9 are feasible. In other words, it is not necessary to make the shutter-on periods of the first shutter lens 102 and the second shutter lens 104 expand forward and/or backward together. These alternative designs all fall within the scope of the present invention. Besides, since those skilled in the art will readily understand other alternative designs after reading above paragraphs, further description is omitted here for brevity.

In the exemplary embodiments described above, within the image stabilization periods such as TH1, TH1', TH2, TH2', TH3, and TH3', the user is allowed to view images mainly by the enabling of the backlight module 114. Regarding the first shutter lens 102/the second shutter lens 104 within the shutter-on period, the liquid crystal cells in the liquid crystal layer of the first shutter lens 102/the second shutter lens 104 start rotating before the image stabilization period for making the first shutter lens 102/the second shutter lens 104 be switched from the off-state to the on-state, and start rotating after the image stabilization period for making the first shutter lens 102/the second shutter lens 104 be switched from the on-state to the off-state. In this way, when the user views images within the image stabilization periods, the present invention may further decrease the brightness attenuation induced due to the response time period (i.e., the rotating process) of the liquid crystal cells.

Moreover, in order to maintain the same brightness user's left eye and right eye perceive, in the exemplary embodiment, the ratio of the shutter-on period in which the first shutter lens 102 stays in the on-state to the shutter-off period in which the first shutter lens 102 stays in the off-state is substantially equal to the ratio of the shutter-on period in which the second shutter lens 104 stays in the on-state to the shutter-off period in which the second shutter lens 104 stays in the off-state. In other words, in the process that each of the first shutter lens 102 and the second shutter lens 104 continuously is switched between the on-state and the off-state, a total length of shutter-on periods that the first shutter lens 102 stays in the on-state is substantially equal to a total length of shutter-on periods that the second shutter lens 104 stays in the on-state (on the other hand, a total length of shutter-off periods that the first shutter lens 102 stays in the off-state is substantially equal to a total length of shutter-off periods that the second shutter lens 104 stays in the off-state). Since the lengths of integral shutter-on/shutter-off periods that the first shutter lens 102 and the second shutter lens 104 stay in the on-state/off-state are the same, user's left eye and right eye would feel the same brightness. However, it is only utilized as an exemplary embodiment, and is not meant to be a limitation to the present invention. For example, under the condition where the length of an integral shutter-on/shutter-off period of the first shutter lens 102 is equal to the length of an integral shutter-on/shutter-off period of the second shutter lens 104, the number of shutter-on times and the number of shutter-off times of the first shutter lens 102 are not required to be equal to the number of shutter-on times and the number of shutter-off times of the second shutter lens 104, respectively.

Besides, switching on and switching off the first shutter lens 102 and the second shutter lens 104 will determine the brightness perceived by the user Therefore, under the premise of increasing the shutter-on periods of the pair of shutter glasses, the number of shutter-on times, the number of shutter-off times, the ratio of the shutter-on period to the shutter-off period and/or the glasses cycle (i.e., the cycle that the left eye and the right eye respectively view the image once) of the first shutter lens 102 and the second shutter lens 104 are adjustable, thereby achieving the objective of adjusting the ambient brightness perceived by the user.

Please note that, as to the video output apparatus 110 operated under a lower refresh rate (e.g., 120 Hz) in the exemplary embodiment described above, a glasses cycle (i.e., the cycle that the left eye and the right eye respectively view the image once) is mainly composed of image output periods of two images. As to the video output apparatus 110 operated under a higher refresh rate (e.g., 240 Hz) in the exemplary embodiment described above, a glasses cycle (i.e., the cycle that the left eye and the right eye respectively view the image once) is mainly composed of image output periods of four images. However, these are for illustrative purposes only, and are not meant to be limitations to the present invention. For example, regarding the video output apparatus 110 that is operated under a lower refresh rate (e.g., 120 Hz), a glasses cycle may also be composed of image output periods of four or six images. In addition, one of the several aforementioned control methods or their combination may be employed to control the pair of shutter glasses 100. The same objective of increasing the shutter-on periods of the pair of shutter glasses is achieved. In brief, the periodicity of the pair of shutter glasses 100 does not necessarily the same as the periodicity of image signals.

In addition, in the present invention, the on-state and the off-state of the backlight module 114 are not limited to fully switching on the backlight module 114 to make the backlight module 114 have 100% brightness output and fully switching off the backlight module 114 to make the backlight module 114 have 0% brightness output, respectively. For example, when the brightness output of the backlight module 114 is higher than a certain value (such as 80% brightness output), the backlight module 114 may be regarded as entering the on-state; besides, when the brightness output of the backlight module 114 is lower than a certain value (such as 20% brightness output), the backlight module 114 may be regarded as entering the off-state. In brief, the on-state and the off-state of the backlight module 114 may be defined according to the actual design requirement/consideration.

## Claims

1. A method for controlling a video output apparatus and a pair of shutter glasses (100) utilized for viewing stereo images presented by a video output apparatus (110), the video output apparatus (110) outputting a group of first images and a group of second images, alternately, the video output apparatus (110) successively outputting a primary first image and the same image as at least a secondary first image included in the group of first images in order, within a plurality of first image output periods, respectively, the video output apparatus (110) successively outputting a primary second image and the same image as at least a secondary second image included in the group of second images in order, within a plurality of second image output periods, respectively, one of the group of first images and the group of second images being a group of left-eye images, the other one of the group of first images and the group of second images being a group of right-eye images, the method comprising:
controlling a first shutter lens (102, 104) of the pair of shutter glasses (100) to be switched between an on-state and an off-state, wherein the first shutter lens (102, 104) stays in the on-state within a first image output period corresponding to a specific secondary first image, and stays in an off-state throughout a second image output period corresponding to a specific primary second image immediately following the specific secondary first image; and
controlling a second shutter lens (102, 104) of the pair of shutter glasses (100) to be switched between the on-state and the off-state, wherein the second shutter lens (102, 104) stays in the off-state throughout the second image output period corresponding to the specific primary second image, and stays in the on-state within a second image output period corresponding to a specific secondary second image immediately following the specific primary second image;
wherein one of the first shutter lens and the second shutter lens (102, 104) is utilized for viewing left-eye images, and the other one of the first shutter lens and the second shutter lens (102, 104) is utilized for viewing right-eye images; and the first shutter lens and the second shutter lens (102, 104) simultaneously stay in the off-state only within a single continuous time period of the second image output period corresponding to the specific primary second image:
wherein each image output period comprises an image driving period and an image stabilization period; controlling a backlight module (114) of the video output apparatus (110) such that it stays in an on-state within a specific image driving period corresponding to at least one of the specific secondary first image and the specific secondary second image, and stays in an off-state throughout the specific primary second image and stays in the off-state within at least part of one or two specific image stabilization period(s) adjacent to the specific image driving period; and a length of a time period during which the backlight module (114) stays in the off-state within the specific image stabilization period is shorter than a length of the specific image stabilization period.

2. The method of claim 1, **characterized in that** the single continuous time period is at least partly overlapped with a backlight off period in which a backlight module (114) of the video output apparatus (110) stays in an off-state, and the backlight module (114) is a plain backlight module or a scanning backlight module.

3. The method of claim 1, **characterized in that** the first shutter lens (102, 104) stays in the on-state within the first image output period corresponding to the specific secondary first image, and continuously stays in the on-state until the first shutter lens (102, 104) is switched from the on-state to the off-state within the second image output period corresponding to the specific primary second image.

4. The method of claim 3, **characterized in that** the second shutter lens (102, 104) is switched from the off-state to the on-state within the second image output period corresponding to the specific primary second image, and continuously stays in the on-state to thereby remain in the on-state within the second image output period corresponding to the specific secondary second image.

5. The method of claim 1, **characterized in that** the second shutter lens (102, 104) is switched from the off-state to the on-state within the second image output period corresponding to the specific primary second image, and continuously stays in the on-state to thereby remain in the on-state within the second image output period corresponding to the specific secondary second image.

6. The method of claim 1, **characterized in that** a sum of lengths of all secondary first images in the group is greater than a length of the primary first image in the group of first images, and a sum of lengths of all secondary second images in the group of second images is greater than a length of the primary second image in the group of second images.

7. A system consisting of a pair of shutter glasses (100) utilized for viewing stereo images presented by a video output apparatus (110), and a video output apparatus (110) comprising a backlight module (114) and outputting a group of first images and a group of second images, alternately, the video output apparatus (110) successively outputting a primary first image and the same image as at least a secondary first image included in the group of first images in order, within a plurality of first image output periods, respectively, the video output apparatus (110) successively outputting a primary second image and the same image as at least a secondary second image included in the group of second images in order, within a plurality of second image output periods, respectively, one of the group of first images and the group of second images being a group of left-eye images, the other one of the group of first images and the group of second images being a group of right-eye images, the pair of shutter glasses (100) comprising:
a first shutter lens (102, 104);
a second shutter lens (102, 104), wherein one of the first shutter lens and the second shutter lens (102, 104) is utilized for viewing left-eye images and the other one of the first shutter lens and the second shutter lens (102, 104) is utilized for viewing right-eye images; and **characterized by**:
a control circuit (106), electrically connected to the first shutter lens and the second shutter lens (102, 104), arranged for controlling the first shutter lens (102, 104) to be switched between an on-state to an off-state and controlling the second shutter lens (102, 104) to be switched between the on-state and the off-state; controlling the first shutter lens (102, 104) to stay in the on-state within a first image output period corresponding to a specific secondary first image, and stay in the oft-state throughout a second image output period corresponding to a specific primary second image immediately following the specific secondary first image; and controlling the second shutter lens (102, 104) to stay in the off-state throughout the second image output period corresponding to the specific primary second image, and stay in the on-state within a second image output period corresponding to a specific secondary second image immediately following the specific primary second image;
wherein the first shutter lens and second shutter lens (102, 104) simultaneously stay in the off-state only within a single continuous time period of the second image output period corresponding to the specific primary second image;
wherein each image output period comprises an image driving period and an image stabilization period; the backlight module (114) of the video output apparatus (110) stays in an on-state within a specific image driving period corresponding to at least one of the specific secondary first image and the specific secondary second image, and stays in an off-state throughout the specific primary second image and stays in the off-state within at least part of one or two specific image stabilization period(s) adjacent to the specific image driving period; and a length of a time period during which the backlight module (114) stays in the off-state within the specific image stabilization period is shorter than a length of the specific image stabilization period.

8. The pair of shutter glasses (100) of claim 7, **characterized in that** the single continuous time period is at least partly overlapped with a backlight off period in which a backlight module (114) of the video output apparatus (110) stays in an off-state, and the backlight module (114) is a plain backlight module or a scanning backlight module.

9. The pair of shutter glasses (100) of claim 7, **characterized in that** the control circuit (106) is arranged for controlling the first shutter lens (102, 104) to stay in the on-state within the first image output period corresponding to the specific secondary first image, and continuously stay in the on-state until the first shutter lens (102, 104) is switched from the on-state to the oft-state within the second image output period corresponding to the specific primary second image.

10. The pair of shutter glasses (100) of claim 9, **characterized in that** the control circuit (106) is arranged for controlling the second shutter lens (102, 104) to stay in the on-state within the second image output period corresponding to the specific secondary second image, and continuously stay in the on-state to thereby remain in the on-state within the second image output period corresponding to the specific secondary second image.

11. The pair of shutter glasses (100) of claim 7, **characterized in that** the control circuit (106) is arranged for controlling the second shutter lens (102, 104) to stay in the on-state within the second image output period corresponding to the specific secondary second image, and continuously stay in the on-state to thereby remain in the on-state within the second image output period corresponding to the specific secondary second image.

12. The pair of shutter glasses (100) of claim 7, **characterized in that** a sum of lengths of all secondary first images in the group is greater than a length of the primary first image in the group of first images, and a sum of lengths of all secondary second images in the group is greater than a length of the primary second image in the group of second images.

## Patentansprüche

1. Verfahren zur Steuerung einer Video-Ausgabe-Vorrichtung und einer Synchronbrille (100), die zum Betrachten von Stereo-Bildern verwendet wird, die von einer Video-Ausgabe-Vorrichtung (110) gezeigt werden, worin die Video-Ausgabe-Vorrichtung (110) eine Gruppe erster Bilder und eine Gruppe zweiter Bilder ausgibt, alternativ worin die Video-Ausgabe-Vorrichtung (110) nacheinander ein primäres erstes Bild und das gleiche Bild in mehreren ersten Bild-Ausgabezeiten als mindestens ein sekundäres erstes Bild, das in der Gruppe der ersten Bilder in Reihe enthalten ist, ausgibt, worin die Video-Ausgabe-Vorrichtung (110) nacheinander ein primäres zweites Bild ausgibt und das gleiche Bild in mehreren zweite Bilder-Ausgabezeiten als mindestens ein zweites Bild, das in der Gruppe zweiter Bilder in Reihe enthalten ist, ausgibt, worin die Gruppe erster Bilder oder die Gruppe zweiter Bilder eine Gruppe linker Bilder ist, worin die andere der Gruppe erster Bilder oder der Gruppe zweiter Bilder eine Gruppe rechter Bilder ist, wobei das Verfahren umfasst :
Steuern einer ersten Synchronlinse (102, 104) der Synchronbrille (100), um zwischen einem Zustand AN und einem Zustand AUS zu schalten, worin die erste Synchronlinse (102, 104) in einer ersten Bild-Ausgabe-Zeitspanne entsprechend einem bestimmten sekundären ersten Bild in dem Zustand AN verbleibt, und während einer zweiten Bild-Ausgabe-Zeitspanne entsprechend einem bestimmten primären zweiten Bild unmittelbar nach dem bestimmen sekundären ersten Bild in einem Zustand AUS verbleibt; und
Steuern einer zweiten Synchronlinse (102, 104) der Synchronbrille (100), um zwischen dem Zustand AN und dem Zustand AUS zu schalten, worin die zweite Synchronlinse (102, 104) während der zweiten Bild-Ausgabe-Zeitspanne entsprechend dem bestimmten primären zweiten Bild in dem Zustand AUS bleibt, und in einer zweiten Bild-Ausgabe-Zeitspanne entsprechend einem bestimmten sekundären zweiten Bild unmittelbar nach dem bestimmten primären zweiten Bild in dem Zustand AN bleibt;
worin die erste Synchronlinse oder die zweite Synchronlinse (102, 104) verwendet wird, um linke Bilder zu sehen, und die andere der ersten Synchronlinse oder der zweiten Synchronlinse (102, 104) dazu verwendet wird rechte Bilder zu sehen; und die erste Synchronlinse und die zweite Synchronlinse (102, 104) gleichzeitig nur in einer einzigen kontinuierlichen Zeitspanne der zweiten Bild-Ausgabe-Zeitspanne entsprechend dem bestimmten primären zweiten Bild in dem Zustand AUS stehen;
worin jede Bild-Ausgabe-Zeitspanne eine Bild-Vorlauf-Zeitspanne und eine Bild-Stabilisierungs-Zeitspanne umfasst; Steuern eines Hintergrundbeleuchtungs-Moduls (114) der Video-Ausgabe-Vorrichtung (110), so dass diese in einer bestimmten Bild-Vorlauf-Zeitspanne entsprechend mindestens dem bestimmten sekundären ersten Bild oder dem bestimmten sekundären zweiten Bild in einem Zustand AN bleibt, und während des bestimmten primären zweiten Bilds in einem Zustand AUS bleibt, und in mindestens einem Teil einer oder zwei bestimmter Bild-Stabilisierungs-Zeitspanne(n) neben der bestimmten Bild-Vorlauf-Zeitspanne in dem Zustand AUS bleibt; und worin eine Länge einer Zeitspanne während der das Hintergrundbeleuchtungs-Modul (114) in dem Zustand AUS bleibt in der bestimmten Bild-Stabilisierungs-Zeitspanne kürzer ist als eine Länge der bestimmten Bild-Stabilisierungs-Zeitspanne.

2. Verfahren nach Anspruch 1, **dadurch gekennzeichnet, dass** die einzige kontinuierliche Zeitspanne mindestens teilweise mit einer Rücklicht-AUS-Zeitspanne überlappt, während der ein Hintergrundbeleuchtungs-Modul (114) der Video-Ausgabe-Vorrichtung (110) in einem Zustand AUS bleibt, und worin das Hintergrundbeleuchtungs-Modul (114) ein herkömmliches Hintergrundbeleuchtungs-Modul oder ein Durchmusterungs-Hintergrundbeleuchtungs-Modul ist.

3. Verfahren nach Anspruch 1, **dadurch gekennzeichnet, dass** die erste Synchronlinse (102, 104) in der ersten Bild-Ausgabe-Zeitspanne entsprechend dem bestimmten sekundären ersten Bild in dem Zustand AN bleibt, und ununterbrochen in dem Zustand AN bleibt, bis die erste Synchronlinse (102, 104) in der zweiten Bild-Ausgabe-Zeitspanne entsprechend dem bestimmten primären zweiten Bild von dem Zustand AN in den Zustand AUS schaltet.

4. Verfahren nach Anspruch 3, **dadurch gekennzeichnet, dass** die zweite Synchronlinse (102, 104) in der zweiten Bild-Ausgabe-Zeitspanne entsprechend dem bestimmten primären zweiten Bild von dem Zustand AUS in den Zustand AN schaltet, und ununterbrochen in dem Zustand AN bleibt, um dadurch in der zweiten Bild-Ausgabe-Zeitspanne entsprechend dem bestimmten sekundären zweiten Bild in dem Zustand AN zu bleiben.

5. Verfahren nach Anspruch 1, **dadurch gekennzeichnet, dass** die zweite Synchronlinse (102, 104) in der zweiten Bild-Ausgabe-Zeitspanne entsprechend dem bestimmten primären zweiten Bild von dem Zustand AUS in den Zustand AN schaltet, und ununterbrochen in dem Zustand AN bleibt, um dadurch in der zweiten Bild-Ausgabe-Zeitspanne entsprechend dem bestimmten sekundären zweiten Bild in dem Zustand AN zu bleiben.

6. Verfahren nach Anspruch 1, **dadurch gekennzeichnet, dass** eine Summe an Längen aller sekundärer erster Bilder in der Gruppe größer ist als eine Länge des primären ersten Bilds in der Gruppe erster Bilder, und eine Summe an Längen aller sekundärer zweiter Bilder in der Gruppe zweiter Bilder größer ist als eine Länge des primären zweiten Bilds in der Gruppe zweiter Bilder.

7. System aus einer Synchronbrille (100), die zum Betrachten von Stereobilder verwendet wird, die von einer Video-Ausgabe-Vorrichtung (110) gezeigt werden, und einer Video-Ausgabe-Vorrichtung (110), die ein Hintergrundsbeleuchtungs-Modul (114) umfasst, und eine Gruppe erster Bilder und eine Gruppe zweiter Bilder ausgibt, alternativ worin die Video-Ausgabe-Vorrichtung (110) nacheinander ein primäres erstes Bild bzw. das gleiche Bild als mindestens ein sekundäres erstes Bild, das in der Gruppe erster Bilder in Reihe enthalten ist, in mehreren ersten Bild-Ausgabe-Zeitspannen ausgibt, worin die Video-Ausgabe-Vorrichtung (110) nacheinander ein primäres zweites Bild bzw. das gleiche Bild als mindestens ein sekundäres zweites Bild, das in der Gruppe zweiter Bilder in Reihe enthalten ist, in mehreren zweiten Bild-Ausgabe-Zeitspannen ausgibt, worin die Gruppe erster Bilder oder die Gruppe zweiter Bilder eine Gruppe linker Bilder ist, worin die andere der Gruppe erster Bilder oder der Gruppe zweiter Bilder eine Gruppe rechter Bilder ist, worin die Synchronbrille (100) umfasst:
eine erste Synchronlinse (102, 104);
eine zweite Synchronlinse (102, 104), worin die erste Synchronlinse oder die zweite Synchronlinse (102, 104) dazu verwendet wird linke Bilder zu betrachten und worin die andere der ersten Synchronlinse oder der zweiten Synchronlinse (102, 104) dazu verwendet wird, rechte Bilder zu betrachten; und **dadurch gekennzeichnet**:
einen Steuerschaltkreis (106), der mit der ersten Synchronlinse und der zweiten Synchronlinse (102, 104) elektrisch verbunden und angeordnet ist, um eine Schaltung der ersten Synchronlinse (102, 104) zwischen einem Zustand AN in einen Zustand AUS zu steuern und eine Schaltung der zweiten Synchronlinse (102, 104) zwischen dem Zustand AN und dem Zustand AUS zu steuern; die erste Synchronlinse (102, 104) zu steuern, damit diese in der ersten Bild-Ausgabe-Zeitspanne entsprechend einem bestimmten sekundären ersten Bild in dem Zustand AN bleibt, und während einer zweiten Bild-Ausgabe-Zeitspanne entsprechend einem bestimmten primären zweiten Bild unmittelbar nach dem bestimmten sekundären ersten Bild in dem Zustand AUS bleibt; und Steuern, dass die zweite Synchronlinse (102, 104) während der zweiten Bild-Ausgabe-Zeitspanne entsprechend dem bestimmten primären zweiten Bild in dem Zustand AUS bleibt, und in einer zweiten Bild-Ausgabe-Zeitspanne entsprechend einem bestimmten sekundären zweiten Bild unmittelbar nach dem bestimmten primären zweiten Bild in dem Zustand AN bleibt;
worin die erste Synchronlinse und die zweite Synchronlinse (102, 104) nur innerhalb einer einzigen kontinuierlichen Zeitspanne der zweite Bild-Ausgabe-Zeitspanne entsprechend dem bestimmten primären zweite Bild gleichzeitig in dem Zustand AUS bleiben;
worin jede Bild-Ausgabe-Zeitspanne eine Bild-Vorlauf-Zeitspanne und eine Bild-Stabilisierungs-Zeitspanne umfasst; worin das Hintergrundbeleuchtungs-Modul (114) der Video-Ausgabe-Vorrichtung (110) innerhalb einer bestimmten Bild-Vorlauf-Zeitspanne entsprechend mindestens dem bestimmten sekundären ersten Bilds und dem bestimmten sekundären zweiten Bilds in einem Zustand AN bleibt, und während des bestimmten primären zweiten Bilds in einem Zustand AUS bleibt und in mindestens einem Teil einer oder zwei bestimmter Bild-Stabilisierungs-Zeitspanne(n) neben der bestimmten Bild-Vorlauf-Zeitspanne in dem Zustand AUS bleibt; und worin eine Länge einer Zeitspanne während der das Hintergrundbeleuchtungs-Modul (114) in der bestimmten Bild-Stabilisierungs-Zeitspanne in dem Zustand AUS bleibt, kürzer ist als eine Länge der bestimmten Bild-Stabilisierungs-Zeitspanne.

8. Synchronbrillle (100) nach Anspruch 7, **dadurch gekennzeichnet, dass** die einzige kontinuierliche Zeitspanne mindestens teilweise mit einer Hintergundlicht-AUS-Zeitspanne überlappt, während der ein Hintergrundsbeleuchtungs-Modul (114) der Video-Ausgabe-Vorrichtung (110) in einem Zustand AUS bleibt, und worin das Hintergrundbeleuchtungs-Modul (114) ein herkömmliches Hintergrundbeleuchtungs-Modul oder ein Durchmusterungs-Hintergrundbeleuchtungs-Modul ist.

9. Synchronbrille (100) nach Anspruch 7, **dadurch gekennzeichnet, dass** der Steuerschaltkreis (106) angeordnet ist, um die erste Synchronlinse (102, 104) zu steuern, innerhalb der ersten Bild-Ausgabe-Zeitspanne entsprechend dem bestimmten sekundären ersten Bild in dem Zustand AN zu bleiben, und ununterbrochen in dem Zustand AN zu bleiben, bis die erste Synchronlinse (102, 104) von dem Zustand AN in den Zustand AUS innerhalb der zweiten Bild-Ausgabe-Zeitspanne entsprechend dem bestimmten primären zweiten Bild schaltet.

10. Synchronbrille (100) nach Anspruch 9, **dadurch gekennzeichnet, dass** der Steuerschaltkreis (106) angeordnet ist, die zweite Synchronlinse (102, 104) zu steuern, innerhalb der zweiten Bild-Ausgabe-Zeitspanne entsprechend dem bestimmten sekundären zweiten Bild in den Zustand AN zu schalten, und ununterbrochen in dem Zustand AN zu verbleiben, um dadurch innerhalb der zweiten Bild-Ausgabe-Zeitspanne entsprechend dem bestimmten sekundären zweite Bild in dem Zustand AN zu bleiben.

11. Synchronbrille (100) nach Anspruch 7, **dadurch gekennzeichnet, dass** der Steuerschaltkreis (106) angeordnet ist, die zweite Synchronlinse (102, 104) zu steuern, innerhalb der zweiten Bild-Ausgabe-Zeitspanne entsprechend dem bestimmten sekundären zweiten Bild in dem Zustand AN zu bleiben, und ununterbrochen in dem Zustand AN zu bleiben, um dadurch innerhalb der zweiten Bild-Ausgabe-Zeitspanne entsprechend dem bestimmten sekundären zweiten Bild in dem Zustand AN zu bleiben.

12. Synchronbrille (100) nach Anspruch 7, **dadurch gekennzeichnet, dass** eine Summe an Längen aller sekundärer erster Bilder in der Gruppe größer ist als eine Länge des primären ersten Bilds in der Gruppe erster Bilder, und eine Summe an Längen aller sekundärer zweiter Bilder in der Gruppe größer ist als eine Länge des primären zweiten Bilds in der Gruppe zweiter Bilder.

## Revendications

1. Procédé pour commander un appareil de sortie vidéo et une paire de lunettes à obturateur (100) utilisée pour voir des images stéréoscopiques présentées par un appareil de sortie vidéo (110), l'appareil de sortie vidéo (110) faisant sortir en alternance un groupe de premières images et un groupe de deuxièmes images, l'appareil de sortie vidéo (110) faisant successivement sortir une première image principale et la même image qu'au moins une première image secondaire inclue dans le groupe de premières images dans l'ordre, respectivement au sein d'une pluralité de périodes de sortie de première image, l'appareil de sortie vidéo (110) faisant successivement sortir une deuxième image principale et la même image qu'au moins une deuxième image secondaire inclue dans le groupe de deuxièmes images dans l'ordre, au sein d'une pluralité respective de périodes de sortie de deuxième image, l'un d'entre le groupe de premières images et le groupe de deuxièmes images étant un groupe d'images d'oeil gauche, l'autre d'entre le groupe de premières images et le groupe de deuxièmes images étant un groupe d'images d'oeil droit, le procédé comprenant :
la commande d'une première lentille d'obturation (102, 104) de la paire de lunettes à obturateur (100) afin d'être commutée entre un état allumé et un état éteint, dans lequel la première lentille d'obturation (102, 104) reste dans l'état allumé dans les limites d'une période de sortie de première image correspondant à une première image secondaire spécifique, et reste dans un état éteint pendant une période de sortie de deuxième image correspondant à une deuxième image principale spécifique suivant immédiatement la première image secondaire spécifique ; et
la commande d'une deuxième lentille d'obturation (102, 104) de la paire de lunettes à obturateur (100) afin d'être commutée entre l'état allumé et l'état éteint, dans lequel la deuxième lentille d'obturation (102, 104) reste dans l'état éteint pendant la période de sortie de deuxième image correspondant à la deuxième image principale spécifique, et reste dans l'état allumé dans les limites d'une période de sortie de deuxième image correspondant à une deuxième image secondaire spécifique suivant immédiatement la deuxième image principale spécifique ;
dans lequel l'une d'entre la première lentille d'obturation et la deuxième lentille d'obturation (102, 104) est utilisée pour voir des images d'oeil gauche, et l'autre d'entre la première lentille d'obturation et la deuxième lentille d'obturation (102, 104) étant utilisée pour voir des images d'oeil droit ; et la première lentille d'obturation et la deuxième lentille d'obturation (102, 104) restant simultanément dans l'état éteint seulement dans les limites d'une unique période de temps continue de la période de sortie de deuxième image correspondant à la deuxième image principale spécifique ;
dans lequel chaque période de sortie d'image comprend une période de commande d'image et une période de stabilisation d'image ;
la commande d'un module de rétroéclairage (114) de l'appareil de sortie vidéo (110) de manière à ce qu'il reste dans un état allumé dans les limites d'une période de commande d'image spécifique correspondant au moins à l'une d'entre la première image secondaire spécifique et la deuxième image secondaire spécifique, et reste dans un état éteint pendant la deuxième image principale spécifique et reste dans l'état éteint dans les limites d'au moins une partie d'une ou deux période(s) de stabilisation d'image spécifique(s) adjacente(s) à la période de commande d'image spécifique : et une longueur d'une période de temps pendant laquelle le module de rétroéclairage (114) reste dans l'état éteint dans les limites de la période de stabilisation d'image spécifique étant plus courte qu'une longueur de la période de stabilisation d'image spécifique.

2. Procédé selon la revendication 1, **caractérisé en ce que** l'unique période de temps continue est au moins partiellement en superposition avec une période d'extinction de rétroéclairage où un module de rétroéclairage (114) de l'appareil de sortie vidéo (110) reste dans un état éteint, et le module de rétroéclairage (114) étant un module de rétroéclairage simple ou un module de rétroéclairage de balayage.

3. Procédé selon la revendication 1, **caractérisé en ce que** la première lentille d'obturation (102, 104) reste dans l'état allumé dans les limites de la période de sortie de première image correspondant à la première image secondaire spécifique, et reste en continu dans l'état allumé jusqu'à ce que la première lentille d'obturation (102, 104) est commutée de l'état allumé à l'état éteint dans les limites de la période de sortie de deuxième image correspondant à la deuxième image principale spécifique.

4. Procédé selon la revendication 3, **caractérisé en ce que** la deuxième lentille d'obturation (102, 104) est commutée de l'état éteint à l'état allumé dans les limites de la période de sortie de deuxième image correspondant à la deuxième image principale spécifique, et reste en continu dans l'état allumé afin de rester ainsi dans l'état allumé dans les limites de la période de sortie de deuxième image correspondant à la deuxième image secondaire spécifique.

5. Procédé selon la revendication 1, **caractérisé en ce que** la deuxième lentille d'obturation (102, 104) est commutée de l'état éteint à l'état allumé dans les limites de la période de sortie de deuxième image correspondant à la deuxième image principale spécifique, et reste en continu dans l'état allumé afin de rester ainsi dans l'état allumé dans les limites de la période de sortie de deuxième image correspondant à la deuxième image secondaire spécifique.

6. Procédé selon la revendication 1, **caractérisé en ce qu'**une somme des longueurs de toutes les premières images secondaires dans le groupe est supérieure à une longueur de la première image principale dans le groupe de premières images, et **en ce qu'**une somme des longueurs de toutes les deuxièmes images secondaires dans le groupe de deuxièmes images est supérieure à une longueur de la deuxième image principale dans le groupe de deuxièmes images.

7. Système formé par :
une paire de lunettes à obturateur (100) utilisée pour voir des images stéréoscopiques présentées par un appareil de sortie vidéo (110), et un appareil de sortie vidéo (110) comprenant un module de rétroéclairage (114) et faisant sortir en alternance un groupe de premières images et un groupe de deuxièmes images, l'appareil de sortie vidéo (110) faisant successivement sortir une première image principale et la même image qu'au moins une première image secondaire inclue dans le groupe de premières images dans l'ordre, respectivement au sein d'une pluralité de périodes de sortie de première image, l'appareil de sortie vidéo (110) faisant successivement sortir une deuxième image principale et la même image qu'au moins une deuxième image secondaire inclue dans le groupe de deuxièmes images dans l'ordre, respectivement au sein d'une pluralités de périodes de sortie de deuxième image, l'un d'entre le groupe de premières images et le groupe de deuxièmes images étant un groupe d'images d'oeil gauche, l'autre d'entre le groupe de premières images et le groupe de deuxièmes images étant un groupe d'images d'oeil droit, la paire de lunettes à obturateur (100) comprenant :
une première lentille d'obturation (102, 104) ;
une deuxième lentille d'obturation (102, 104), dans lequel l'une d'entre la première lentille d'obturation et la deuxième lentille d'obturation (102, 104) est utilisée pour voir des images d'oeil gauche et l'autre d'entre la première lentille d'obturation et la deuxième lentille d'obturation (102, 104) étant utilisée pour voir des images d'oeil droit ; et
**caractérisé par** :
un circuit de commande (106) raccordé électriquement à la première lentille d'obturation et la deuxième lentille d'obturation (102, 104), étudié pour commander la première lentille d'obturation (102, 104) afin qu'elle soit commutée entre un état allumé et un état éteint et commander la deuxième lentille d'obturation (102, 104) afin qu'elle soit commutée entre l'état allumé et l'état éteint ; la commande de la première lentille d'obturation (102, 104) afin qu'elle reste dans l'état allumé dans les limites d'une période de sortie de première image correspondant à une première image secondaire spécifique, et reste dans l'état éteint pendant une période de sortie de deuxième image correspondant à une deuxième image principale spécifique suivant immédiatement la première image secondaire spécifique ; et commander la deuxième lentille d'obturation (102, 104) afin qu'elle reste dans l'état éteint pendant la période de sortie de deuxième image correspondant à la deuxième image principale spécifique, et reste dans l'état allumé dans les limites d'une période de sortie de deuxième image correspondant à une deuxième image secondaire spécifique suivant immédiatement la deuxième image principale spécifique ;
dans lequel la première lentille d'obturation et la deuxième lentille d'obturation (102, 104) restent simultanément dans l'état éteint seulement dans les limites d'une unique période de temps continue de la période de sortie de deuxième image correspondant à la deuxième image principale spécifique ;
dans lequel chaque période de sortie d'image comprend une période de commande d'image et une période de stabilisation d'image ; le module de rétroéclairage (114) de l'appareil de sortie vidéo (110) restant dans un état allumé dans les limites d'une période de commande d'image spécifique correspondant au moins à l'une d'entre la première image secondaire spécifique et la deuxième image secondaire spécifique, et restant dans un état éteint pendant la deuxième image principale spécifique et restant dans l'état éteint dans les limites d'au moins une partie d'une ou deux période(s) de stabilisation d'image spécifique(s) adjacente(s) à la période de commande d'image spécifique ; et une longueur d'une période de temps pendant laquelle le module de rétroéclairage (114) reste dans l'état éteint dans les limites de la période de stabilisation d'image spécifique étant plus courte qu'une longueur de la période de stabilisation d'image spécifique.

8. Paire de lunettes à obturateur (100) selon la revendication 7, **caractérisée en ce que** l'unique période de temps continue est au moins partiellement en superposition avec une période d'extinction de rétroéclairage où un module de rétroéclairage (114) de l'appareil de sortie vidéo (110) reste dans un état éteint, et le module de rétroéclairage (114) étant un module de rétroéclairage simple ou un module de rétroéclairage de balayage.

9. Paire de lunettes à obturateur (100) selon la revendication 7, **caractérisée en ce que** le circuit de commande (106) est étudié pour commander la première lentille d'obturation (102, 104) afin qu'elle reste à l'état allumé dans les limites de la période de sortie de première image correspondant à la première image secondaire spécifique, et reste en continue dans l'état allumé jusqu'à ce que la première lentille d'obturation (102, 104) est commutée de l'état allumé à l'état éteint dans les limites de la période de sortie de deuxième image correspondant à la deuxième image principale spécifique.

10. Paire de lunettes à obturateur (100) selon la revendication 9, **caractérisée en ce que** le circuit de commande (106) est étudié pour commander la deuxième lentille d'obturation (102, 104) afin qu'elle reste dans l'état allumé dans les limites de la période de sortie de deuxième image correspondant à la deuxième image secondaire spécifique, et reste en continu dans l'état allumé afin de rester ainsi dans l'état allumé dans les limites de la période de sortie de deuxième image correspondant à la deuxième image secondaire spécifique.

11. Paire de lunettes à obturateur (100) selon la revendication 7, **caractérisée en ce que** le circuit de commande (106) est étudié pour commander la deuxième lentille d'obturation (102, 104) afin qu'elle reste dans l'état allumé dans les limites de la période de sortie de deuxième image correspondant à la deuxième image secondaire spécifique, et reste en continu dans l'état allumé afin de rester ainsi dans l'état allumé dans les limites de la période de sortie de deuxième image correspondant à la deuxième image secondaire spécifique.

12. Paire de lunettes à obturateur (100) selon la revendication 7, **caractérisée en ce qu'**une somme des longueurs de toutes les premières images secondaires dans le groupe est supérieure à une longueur de la première image principale dans le groupe de premières images, et **en ce qu'**une somme des longueurs de toutes les deuxièmes images secondaires dans le groupe est supérieure à une longueur de la deuxième image principale dans le groupe de deuxièmes images.
